# EUROPEAN PATENT APPLICATION

(11) **EP 4 768 887 A1**
(43) Date of publication of application: **01.07.2026**
(21) Application number: 25221050.5
(22) Date of filing: 05.12.2025
(51) Int. Cl.: G01N 1/31, G01N 35/10

(54) **ADVANCED TISSUE STAINING SYSTEM AND METHOD**

(30) Priority: 31.12.2024 US 202463740927 P; 23.07.2025 US 202519278550
(71) Applicant: Sakura Finetek U.S.A., Inc., Torrance, CA 90501 (US)
(72) Inventor: SHAH, Amit D., Redondo Beach, 90278 (US)
(74) Representative: Studio Torta S.p.A.

(57) **Abstract**

A system including: a carousel including a plurality of mounting stations dimensioned to receive at least one fluid dispensing cartridge; and a receiving assembly positioned beneath the carousel, the receiving assembly including a plurality of reaction stations, each of the plurality of reaction stations including: a body comprising a length dimension and a width dimension that together define a chamber to accommodate a single slide therein; and a lid comprising a first position to cover the chamber and a second position to expose a portion of the chamber. A method including moving a lid of a reaction station to expose a single microscope slide including a sample and dispensing one or more reagents on the sample.

## Description

### CROSS-REFERENCE TO RELATED APPLICATIONS

This nonprovisional patent application claims the benefit of pending United States provisional patent application number 63/740,927 titled "ADVANCED TISSUE STAINING SYSTEM AND METHOD" filed on December 31, 2024, the contents of which are incorporated herein in their entirety.

### FIELD

An automated system for depositing reagents on biological specimens.

### BACKGROUND

In various settings, processing and testing of biological specimens is required for diagnostic purposes. Generally speaking, pathologists and other diagnosticians collect and study samples from patients, and utilize microscopic examination, and other devices to assess the samples at cellular levels. Numerous processing steps typically are involved in pathology and other diagnostic processes, including the collection of biological samples such as blood and tissue, preparing the samples, preparation of microscope slides, staining samples on microscope slides, examination, re-testing or re-staining, collecting additional samples, re-examination of the samples, and ultimately the offering of diagnostic findings.

Sample (e.g., tissue) staining processors or stainers can be operated with varying levels of automation to process human or animal tissue specimens for histology or pathology uses. Various types of chemical reagents can be used at various stages of tissue processing and various systems have been developed for delivering reagents to specimen containing slides. Examples of known reagent delivery systems include small quantity release dispensers, manual pouring into reagent vats, or via bulk containers connected with a stainer via tubing.

There are various disadvantages of known systems. For example, manually pouring into, or draining, reagent vats is susceptible to cross contamination, is time consuming and requires pouring accuracy, thereby decreasing the overall efficiency and accuracy of the tissue processing system. Another disadvantage is that manually pouring and draining reagents can be sloppy, requiring clean-up of spills and consequential instrument down-time. A further disadvantage is that manually selecting and applying the correct reagent introduces significant risk of human error and increased possibility of reagent selection errors and application errors resulting in false positive or negative assay results, leading not only to a decrease in test accuracy and operational efficiency but also misdiagnosis.

### BRIEF DESCRIPTION OF THE DRAWINGS

The embodiments of the invention are illustrated by way of example and not by way of limitation in the figures of the accompanying drawings in which like references indicate similar elements. It should be noted that references to "an" or "one" embodiment in this disclosure are not necessarily to the same embodiment, and such references mean at least one.
**Figure 1** shows a perspective top side view of a sample processing system.
**Figure 2** shows a perspective top side view of a single reaction station separated from a reaction compartment of the sample processing system of **Figure 1** with a lid of the reaction station in a closed position.
**Figure 3** shows a perspective top side view of the reaction station of **Figure 2** with a lid of the reaction station in an open position.
**Figure 4** shows side view of the reaction station of **Figure 2** with a lid of the reaction station in a closed position.
**Figure 5** shows a top side perspective view of the reaction station of **Figure 2** with a body of the reaction station removed and illustrates a chamber of the substructure of the reaction station.
**Figure 6A** shows a side perspective view of the reaction station of **Figure 2** with a tray of the reaction station supported by a pedestal in a highest position.
**Figure 6B** shows a side perspective view of a slide support assembly including a pedestal and a tray isolated from the reaction station of **Figure 2****.**
**Figure 7A** shows a side view of a portion of the reaction station of **Figure 2** including the body, the pedestal and the tray and shows the tray supported by the pedestal in a first or lowest position.
**Figure 7B** shows a side view of a portion of the reaction station of **Figure 2** including the body, the pedestal and the tray and shows the tray supported by the pedestal in a second position.
**Figure 7C** shows a side view of a portion of the reaction station of **Figure 2** including the body, the pedestal and the tray and shows the tray supported by the pedestal in a third position.
**Figure 7D** shows a side view of a portion of the reaction station of **Figure 2** including the body, the pedestal and the tray and shows the tray supported by the pedestal in a fourth or highest position.
**Figure 8** shows a perspective top side view of a portion of the reaction station of **Figure 2** including the body, the pedestal and the tray and shows the tray tilted.
**Figure 9A** shows a side view of a portion of the reaction station of **Figure 2** through line 9-9' of **Figure 8** and illustrates the tray moving downward in a horizontal (non-tipped) orientation.
**Figure 9B** shows a side view of a portion of the reaction station of **Figure 2** through line 9-9' of **Figure 8** and illustrates the tray moving downward in a tipped orientation.
**Figure 10** shows a perspective left side view of the carousel assembly of the sample processing system of **Figure** 1 in isolation.
**Figure** 11 shows a perspective right side view of a portion of a gantry of the carousel assembly **of** **Figure 10** in isolation and illustrates an x-direction (longitudinal) drive mechanism.
**Figure 12** shows a perspective rear side view of a U-shaped bracket and a transversal drive support bracket of the carousel assembly of **Figure 10** in isolation.
**Figure 13** shows a perspective rear side view of a portion of a carousel of the carousel assembly of **Figure 10** in isolation.
**Figure 14** shows a side perspective view of an arm assembly isolated from the gantry and carousel of the carousel assembly of **Figure 10****.**
**Figure 15** shows a perspective front left side view of a storage rack of the sample processing system of **Figure** 1 in isolation.
**Figure 16** shows a side perspective view of a reagent cartridge that is representative of reagent cartridges operable for storage in the storage rack of **Figure 15** and use in dispensing reagents in the sample processing syest of **Figure 1****.**
**Figure 17** shows a perspective front right side view of a portion of the storage rack of **Figure 15** and illustrates two reagent cartridges similar to the reagent cartridge of **Figure 16** contained therein.
**Figure 18** shows a portion of the carousel of Figure 13 including a pedestal or cartridge carrier plate isolated from a base of the column and illustrates a reagent cartridge in a dock of the pedestal or cartridge carrier plate.
**Figure 19** shows a front side view of a service station of the sample processing system of **Figure 1****.**

### DETAILED DESCRIPTION

In the following paragraphs, the invention will be described in detail by way of example with reference to the accompanying drawings. Throughout this description, the embodiments and examples shown should be considered as exemplars, rather than as limitations on the present invention. Furthermore, reference to various aspects of the embodiments disclosed herein does not mean that all claimed embodiments or methods must include the referenced aspects.

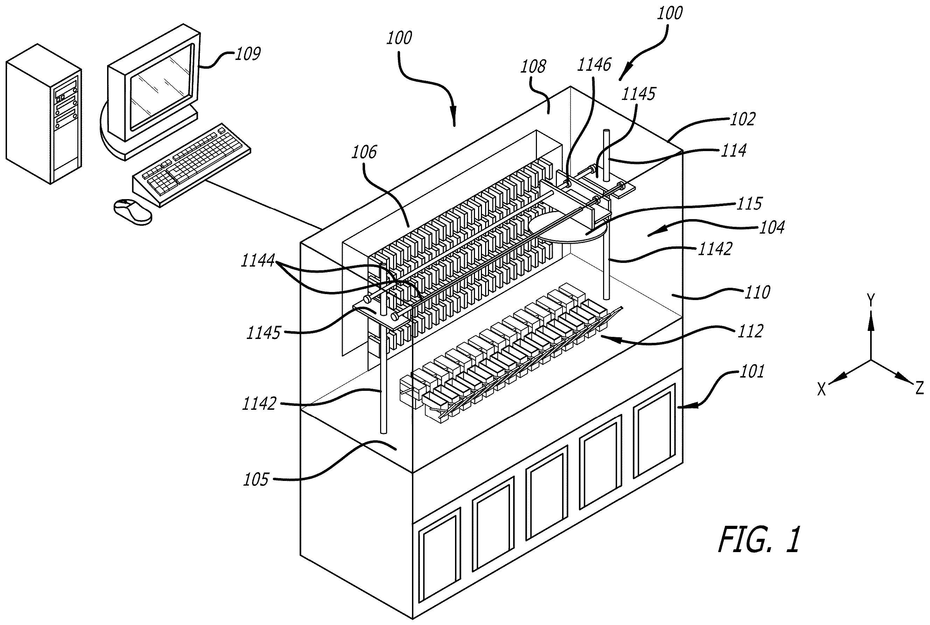

**Figure 1** illustrates a perspective view of a sample processing system. Sample processing system 100 includes housing 102 for enclosing and storing various components of processing system 100. Housing 102 includes reaction compartment 104 and storage compartment 101. Reaction compartment 104 is separated from storage compartment 101 by platform 105 that forms a base of reaction compartment 104. In addition to platform 105, opposing sidewalls project from platform 105 and a cover connects an end of each of the sidewalls. Together, the cover, sidewalls and platform 105 define a compartment within which sample processing occurs. Cover member 108 and door member 110 (on a front of housing 102 as viewed) may be used to gain access to components within reaction compartment 104.

Reaction compartment 104 is dimensioned (e.g., has an interior volume) to accommodate a storage rack to store a number of reagent cartridges. Storage rack 106 may be mounted on platform 105 or to one of the sidewalls of reaction compartment 104 (e.g., a rear sidewall as viewed). Storage rack 106 may be used to store reagent cartridges. A representative reagent cartridge is a single use cartridge, such as a thermal inkjet cartridge that contains a volume of a reagent that may be used in pathological or histological processing. Storage rack 106 contains an array of slots to store individual reagent cartridges in, for example, a column and row array. Storage rack 106 may include refrigeration to store reagent cartridges in a refrigerated state. Representative refrigeration may include a compressor that constricts a refrigerant vapor and pushes the vapor through coils where it liquifies and cools the storage rack slots.

Reaction compartment 104 is dimensioned to accommodate a plurality of reaction stations 112 therein. **Figure 1** representatively shows 30 reaction stations 112 arranged in a planar (an xz plane) in a 15x2 configuration on platform 105. It is appreciated that the number of reaction stations and configuration will depend in part on the area dedicated to reaction compartment 104. It is thus contemplated that the number of reaction stations may vary as may their configuration. Disposed above reaction stations 112 as viewed is a carousel assembly including gantry 114 and carousel 115. Carousel 115 is operable to house/contain a number of reagent cartridges and dispense reagents from respective reagent cartridges onto respective slides in a reaction stations 112. Carousel 115 is operable to move on gantry 114 to position a reagent cartridge over individual reaction stations 112 as well as to load/unload reagent cartridges from/to storage rack 106.

Sample processing system 100 also includes controller 109. Controller 109 includes non-transitory machine-readable instructions to control an operation of sample processing system including, but not limited to, loading/unloading reagent cartridges in storage rack 106 and loading/unloading reagent cartridges in carousel 115. **Figure 1** shows controller 109 outside of housing 102. It is appreciated that controller 109 may be outside housing 102 or a component inside housing 102.

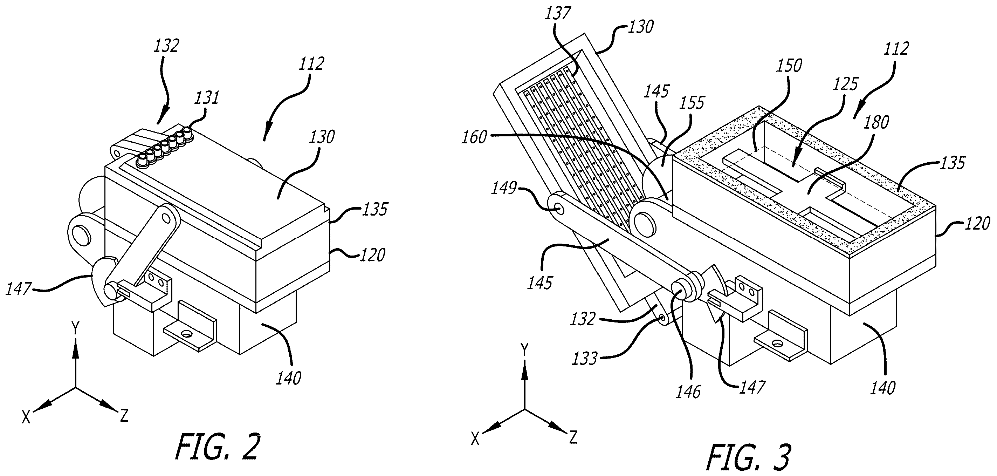

**Figure 2** and **Figure 3** show perspective views of one reaction station separated from reaction compartment 104. Reaction station 112 includes body 120. Body 120 of reaction station 112 includes a base and a pair of opposing sidewalls that define a length dimension (z direction) and a separate pair of opposing sidewalls that define a width dimension (x direction) with the base and the two pairs of sidewalls collectively defining chamber 125 (see **Figure 3**) to accommodate a single slide therein. Representatively, a slide may be a flat piece of glass having a thickness of one millimeter (mm) (0.04 inches) and a length of 75 mm (about 3 inches) and a width of 26 mm (about 1 inch). A length of chamber may be on the order of 80 mm to 100 mm (3.2 inches to 4 inches) and a width of chamber may be on the order of 28 millimeters to 40 millimeters (1.1 inches to 1.6 inches). **Figure 3** shows slide 150 within chamber 125. Body 120 may be made of a material that is chemically inert to the reagents commonly used in a staining process. Representative metal material includes, but is not limited to, stainless steel, zinc alloy, aluminum alloy, silver. A silver material may be used, for example, to impart antimicrobial properties to body 120. Other exemplary material for body 120 may include heat-transferable polymeric materials such as plastics or cellulosic (i.e., cellulose based or comprising) materials, ceramic, Teflon^{®}, glass etc. Body 120 can be formed by any process known in the art such as injection molding, machining or any other manufacturing process suitable for generating the desired features. In addition, it should be appreciated that body 120 can be composed of more than one of the above discussed materials.

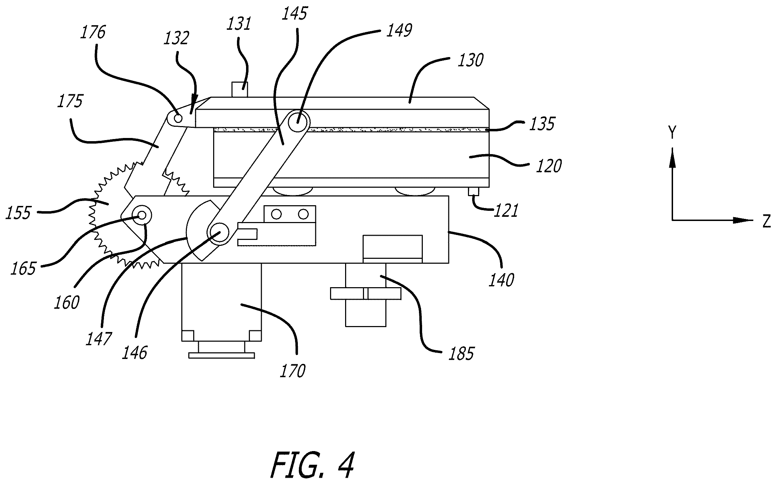

Each of reaction stations 112 also includes a lid of, for example, a plastic or metal material (e.g., stainless steel, zinc alloy, aluminum alloy, silver) having dimensions to cover chamber 125. Lid 130 includes a generally rectangular portion having length (z-direction) and width (x-direction) dimensions similar to body 120. One end of lid 130 also includes clevis portion 132 projecting in a length direction (z-direction) from the generally rectangular portion. Disposed on an upper surface of body 120 as viewed is gasket or seal 135 of a rubber or other polymer material. Gasket or seal 135 may serve to seal (e.g., hermetically seal and fluid seal) or substantially seal chamber 125 when lid 130 is in a position contacting gasket or seal 135 on body 120 (see **Figure 2****,** **Figure 4**).

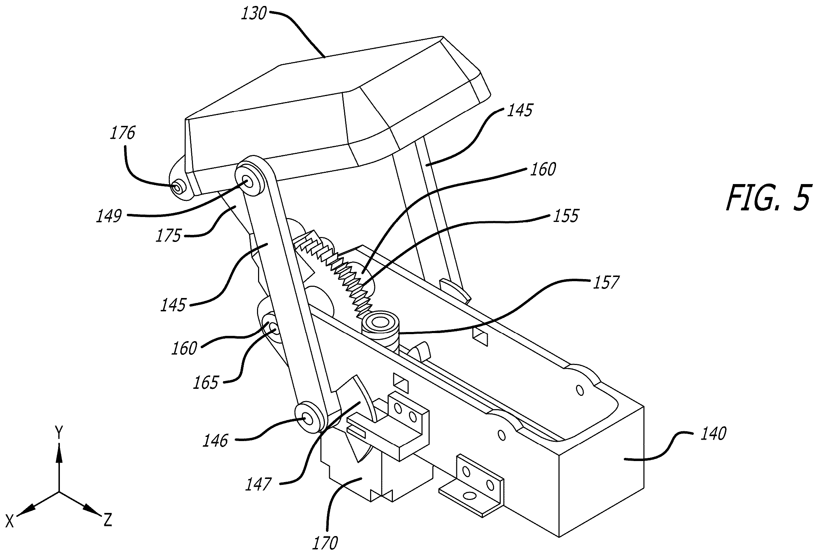

Body 120 of reaction station 112 is mounted on substructure 140. Substructure 140 is shown as a rectangular member of, for example, a plastic or metal material (e.g., stainless steel, aluminum alloy, zinc alloy) including a base and two pairs of opposing sidewalls that define a chamber and the tops of which contact a base of body 120. Substructure 140, in this example, includes a length dimension (z-direction) similar to body 120. A portion of body 120 projects lengthwise in a cantilever fashion beyond an end of substructure 140 leaving a portion of chamber of substructure 140 exposed. **Figure 5** shows a top side perspective view of reaction station 112 with the body 120 removed. As seen in **Figure 5****,** disposed in the chamber of substructure 140 behind body 120 (behind a side of body opposite the cantilevered portion) is gear 155 shown centered on axle 160 between opposite longitudinal sidewalls of substructure 140 (sidewalls defining the z-direction length in **Figure 2** and **Figure 3**). Axle 160 is connected to opposite sides of substructure 140 by screw, bolt, pin or rivet 165. Opposite sides of gear 155 are parallel to opposite sidewalls of substructure 140. An outer perimeter of gear 155 includes cut teeth or cogs. Gear 155 is driven (rotated) by motor 170 disposed, in this example, below substructure 140. Motor 170 includes a protruding shaft that is connected to worm gear 157. Worm gear 157 includes a spiral thread that engages with and drives gear 155 in a clockwise or counterclockwise direction.

Connected to opposite longitudinal sidewalls of substructure 140 and to opposite sidewalls of lid 130 are brackets 145 (one bracket connected to the outside of each sidewall). Brackets 145 are illustrated as rectangular members of, for example, a plastic or metal material (e.g., stainless steel, aluminum alloy, zinc alloy). Each bracket 145 is connected at a first end to a side of substructure 140 through bolt, pin, rivet or screw 146 that allows the bracket to rotate on the bolt, pin, rivet or screw (e.g., a diameter of an opening through bracket 145 is larger than an exterior diameter of bolt, pin or screw 146). A counterweight (counterweight 147) may be disposed between each bracket 145 and a corresponding sidewall of substructure to counter a weight of lid 130 as it is pivoted/rotated. A second end of each bracket 145 is connected to respective opposite longitudinal sides of lid 130 through bolt, pin, rivet or screw 149. Bolt, pin, rivet or screw 149 may pivotally connect the bracket to lid 130. Connected to clevis portion 132 of lid 130 is bracket or driving lever 175. Driving lever 175 includes a first end that is connected in a fixed position to gear 155. A second end of driving lever 175 is connected to clevis portion 132 of lid 130 through bolt, pin, rivet or screw 176. Driving lever 175, gear 155, worm gear 157 and motor 170 allow lid to be moved from a first position that covers (encloses) chamber 125 (see **Figure 2****,** **Figure 4**) to a second position to expose a portion of the chamber (see **Figure 3**). Brackets 145 and driving lever 175 support lid 130 as it is moved between positions.

When lid 130 is in a first position to cover chamber 125 of body 120, rotation of gear 155 by motor 170 (e.g., a counterclockwise rotation) causes driving lever 175 to rotate which pivots and rotates lid 130 to move the lid from the first position to the second position. When lid 130 is in the second position, brackets 145 may be substantially parallel to sidewalls of substructure 140. Rotation of gear 155 by motor 170 in an opposite direction (e.g., a clockwise rotation) causes driving lever 175 to rotate which rotates lid 130 to move the lid from the second position to the first position.

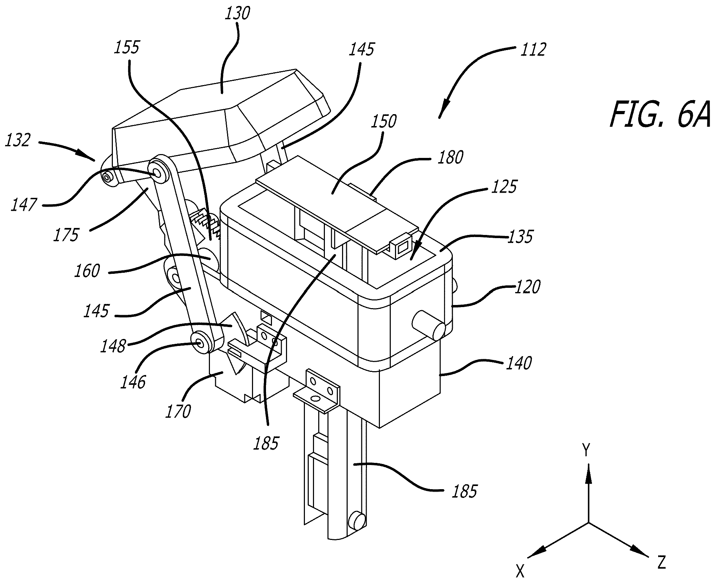

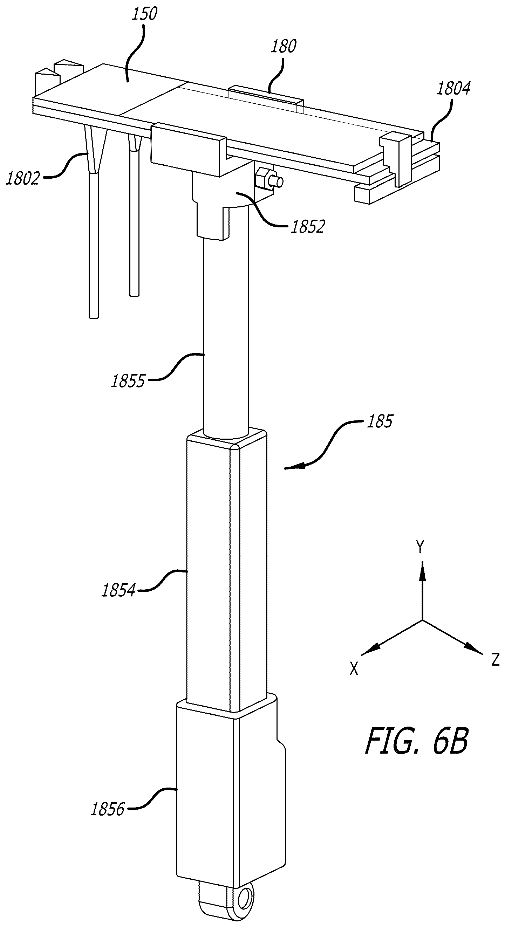

As noted above, chamber 125 of body 120 is dimensioned to accommodate a microscope slide therein for processing (only a single microscope slide). A biological sample may be mounted or fixed to the microscope slide for processing. As illustrated in **Figure 3** and **Figures 6A** and **6B,** to support a microscope slide in chamber 125, each reaction station includes tray 180 mounted on pedestal 185. Tray 180 in one example is a planar structure that has a cross-like shape or form defining four ends. Each end may have an upward projection (e.g., linear or inverted L-shape) to confine a slide on the tray.

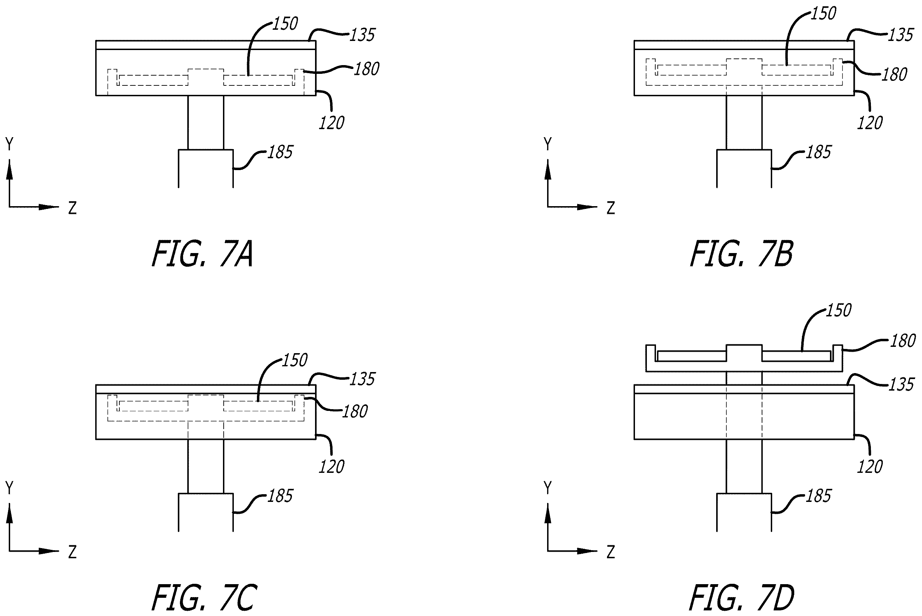

Pedestal 185 is connected to a base of tray 180 at, for example, a midpoint of the tray. In this manner, pedestal 185 extends through a base of body 120 into chamber 125. The opening in a base of body 120 through which pedestal 185 extends may be sealed (e.g., hermetically sealed and liquid sealed), such as with a gasket. Pedestal 185 may be a linear actuator or may be connected to a linear actuator that is operable to move tray 180 between multiple positions relative to chamber 125 (e.g., move tray 180 between multiple depths of chamber 125). In one example, pedestal 185 is operable to move tray 180 between four positions as shown in the sideview illustration of **Figures 7A-7D****: a** first position, where tray 180 and a slide thereon are at a first depth in chamber 125 (**Figure 7A**); a second position where tray 180 and a slide thereon are at a second depth in chamber 125 that is less than the first depth (i.e., tray may be raised from the first depth to the second depth or lowered from the second depth to the first depth) (**Figure 7B**); a third position where tray 180 and a slide thereon are at a third depth in chamber 125 that is less than the second depth (i.e., tray may be raised from the second depth to the third depth or lowered from the third depth to the second depth) (**Figure 7C**); and a fourth position where tray 180 and/or a slide thereon are outside chamber 125 (i.e., above body 120 and above seal 135) (**Figure 7D**). **Figure 3** illustrates reaction station 112 with tray 180 supported by pedestal 185 in the second position. **Figure 6A** illustrates reaction station 112 with tray 180 supported by pedestal 185 in the fourth position.

Tray 180 can be formed of a material having sufficient structural strength and process neutral properties to support a slide, retain and be compatible with reagents and the temperatures employed during use. Representatively, tray 180 may be made of a metal material. Other exemplary materials for tray 180 may include heat-transferable polymeric materials such as plastics or cellulosic (i.e., cellulose based or comprising) materials, ceramic, Teflon^{®}, glass etc. Representatively, tray 180 may be made of a polyoxymethylene thermoplastic such as DELRIN (a registered trademark of E.I. DuPont de Nemours and Co. of Wilmington, Del.). Tray 180 can be formed by any process known in the art such as injection molding, machining or any other manufacturing process suitable for generating the desired features. In addition, it should be appreciated that reaction tray 180 can be composed of more than one of the above discussed materials and such materials may be the same or different for each of tray 180 and body 120. As viewed in **Figure 6A****,** pedestal 185 extends vertically and includes a portion below substructure 140, a portion through a base and chamber of substructure 140, and a portion that extends through a base of body 120 into chamber 125 to connect to tray 180. The opening in a base of body 120 through which pedestal 185 extends may be sealed (e.g., hermetically sealed and liquid sealed), such as with a gasket. The opening in a base of substructure 140 may also be sealed.

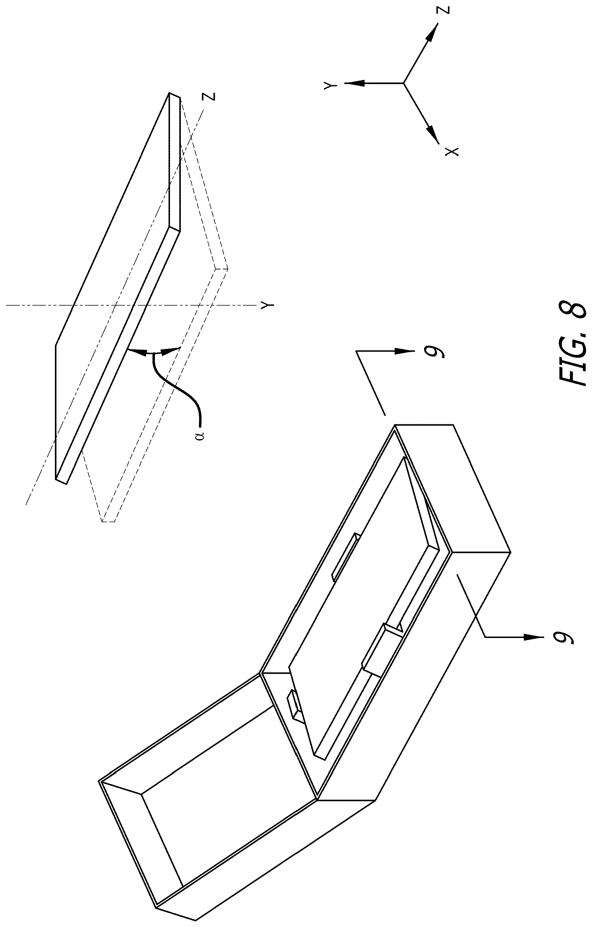

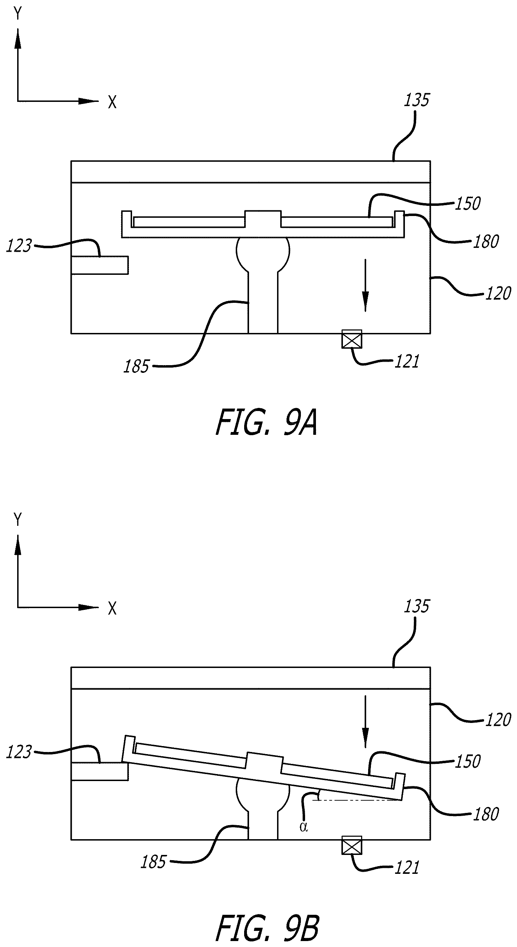

**Figure 6B** shows a side perspective view of a slide support assembly including pedestal 185 and tray 180 isolated from reaction station 112. Pedestal 185 may be connected to a base of tray 180 through pivot or articulated joint connector 1852. In one example, pivot joint connector 1852 allows tray 180 to be rotated to a tilted position. Tray 180 may be rotated in one example along its length (z-direction length), for example, 20 degrees to 45 degrees. **Figure 8** shows tray 180 in a tilted position (after it is rotated from a horizontal position (0 degrees) to a tilted position represented by angle, α, of, for example 20 degrees to 45 degrees relative to horizontal (see inset cross-section)). The pivot position of tray 180 to an angle, α, of 20 degrees to 45 degrees in the first position may allow any excess reagent on slide 150 on tray 180 to be removed from the slide. **Figure 9A** and **Figure 9B** show cross-sectional views of the slide support of **Figure 8** through line 9-9'. **Figure 9A** and **Figure 9B** illustrate one way to place tray 180 in a tilted position. In this example, a sidewall of body 120 includes tab or protuberance 123 projecting from an inside surface between a depth representative of the slide first position (**Figure 7A**) and the second position (**Figure 7B**). Protuberance 123 may be a spring or an elastic body (e.g., plastic) that has a length to prevent a longitudinal edge of slide 150 and tray 180 from moving past it when, for example, slide 150 is moved by pedestal 185 from the second position to the first position. **Figure 9A** representatively shows tray 180 and slide 150 in the second position. As pedestal 185 moves tray 180 and slide 150 downward (as viewed) between the second position and the first position, one side of tray 180/slide 150 (the left side as viewed) will contact protuberance 123 and will be stopped from moving downward. The pivot joint connector between pedestal 185 and tray 180 will allow the other side of tray 180/slide 150 (the right side as viewed) to continue its descent until tray 180/slide 150 is tilted to an angle, α, representative of the first position. Moving tray 180/slide 150 upward from the first position to the second position will reverse the process. The upward movement will initially cause tray 180/slide 150 to return to a horizontal position (i.e., initially move the right side of tray 180/slide 150 as viewed upward until a surface of tray 180/slide 150 is horizontal above protuberance 123). The pivot joint connector may have a ratchet stop mechanism that when tray 180 is rotated to a horizontal position, the connector locks allowing tray 180/slide 150 to remain horizontal as pedestal raises tray 180/slide 150 to the third position (**Figure 7C**).

With the tray 180 and slide 150 are in the tilted position shown in **Figure 9B****,** any excess fluid (e.g., reagent) on slide 150 may drain toward a bottom of chamber 125 of body 120. **Figure 9A** and **Figure 9B** show drain 121 in a base of body. Drain 121 may include a conduit connected thereto with a valve that can be opened or closed. Representatively, the valve can be connected to controller 109 and controller 109 may include non-transitory, machine-readable instructions to electrically actuate the valve to an open position when or after tray 180 and slide 150 are in the tilted position to drain any excess fluid (e.g., reagent) from chamber 125. The conduit may be connected to a waste vessel to collect any excess fluid (e.g., reagent).

Referring again to **Figure 6B****,** disposed on an underside of tray 180 (a side opposite the side supporting slide 150) is slide heater(s) 1802. Slide heater 1802 is, for example, an electric (Joule) heater (e.g., 12 volt, 24 volt). A heater may be selected to rapidly heat a microscope slide to a desired temperature. A representative temperature for certain sample processing operations may be 20°C (approximately ambient) to 150°C, such as between 20°C and 150°C, such as 30°C to 140°C, such as 40°C to 130°C, such as 50°C to 120°C, such as 60°C to 110°C, such as 70°C to 150°C, such as 100°C to 140°C, such as 110°C to 140°C, or such as 120°C to 130°C. Representative tissue processing temperatures include a temperature of 120°C-130°C for pressurized antigen retrieval; about 90°C to 100°C for ambient pressure antigen retrieval and 20°C-40°C for ambient temperature staining. Also disposed on an underside of tray 180 is heat sink 1804. Heat sink 1804 may be made of a highly thermally conductive material (e.g., metal) that can dissipate heat applied to tray 180 (e.g., by slide heater 1802) to cool tray 180 for processing operations that do not require a heated microscope slide surface or that require ambient temperature incubation. Rapid cooling may also be aided by rinsing a microscope slide after an elevated temperature process with a wash buffer or water.

Pedestal 185 is, for example, a linear actuator including outer tube 1854 and inner tube 1855 disposed, at least partially within outer tube 1854. Inner tube 1855 is operable, on, for example, electrical energization to move in a y-direction (up and down) with respect to outer tube 1854. Pedestal 185 may have electrical motor 1856 (e.g., a direct current (DC) motor) at its base that is operable to move inner tube 185 in a y-direction. Electrical motor 1856 may be connected to controller 109 and operate based on non-transitory, machine-readable instructions associated with controller 109. Additional instructions associated with controller 109 may include instructions to control slide heater 1802 to heat tray 180 for an elevated temperature process and instructions to introduce wash buffer or water to rinse a microscope slide after an elevated temperature process.

Referring again to lid 130, lid 130 may include a number of fluid connectors 131 extending from a top surface of the lid (e.g., 4-8 fluid connectors). Fluid connectors 131 may be arranged in a row along one end of a top side of lid 130 (see **Figure 2**). Fluid connectors 131 may be fittings or couplings that allow a fluid conduit (e.g., polymer tubing) to be connected thereto. An underside of lid 130 includes a number of conduits 137 disposed lengthwise across a length of tray 180. Individual ones of fluid connectors 131 are fluidly connected to conduits 137 so that fluid may be delivered through fluid connectors to conduits 137. Conduits 137 may be a tubing material such as a metal (e.g., copper, aluminum, stainless steel). Each conduit 137 may have openings along its length to discharge a fluid from the conduit in a direction of tray 180 when lid 130 is in a first position (e.g., covering chamber 125). Each opening in a conduit may include a nozzle to control a flow direction and rate.

In one example, bulk reagents may individually be connected to fluid connectors 131. Examples of bulk reagents include but are not limited to distilled water, hematoxylin, tris-buffered saline, and dewaxing solution. The bulk reagents may be contained in individual containers that are stored in storage compartment 101 beneath reaction compartment 104 (see **Figure 1**). The bulk reagent sources may be connected to individual ones of fluid connectors 131 through conduits running between, for example, a respective bulk reagent container and a fluid connector. A bulk reagent may be supplied to a fluid connector through the use of a pump as necessary, such as an individual in-line pump for each bulk reagent container connected to a fluid connector. Non-transitory, machine-readable instructions associated with controller 109 may control the metering of a reagent from a bulk reagent container such as by a timer or by an individual in-line flow meter (e.g., a flow meter in a conduit between the bulk reagent container and the fluid connector.

Reaction station 112 may function as a humidor allowing manipulation and maintenance of a humidity level in chamber 125 to reduce reagent evaporation and sample (e.g., tissue) drying. A representative humidity level may be a relative humidity above 50 percent, such as above 60 percent to 100 percent, such as 70 percent to 100 percent, such as 80 percent to 100 percent, or such as 90 percent to 100 percent. In the example illustrated in **Figures 2-4****,** body 120 of reaction station 112 includes chamber 125 that has dimensions to accommodate a reservoir beneath tray 180 when tray 180 is in its lowest position in the chamber (a first position). The reservoir may be filled with fluid (e.g., water) to produce humidity in chamber 125. Representatively, the fluid source (water) may be connected to fluid connector 131. A conduit between the fluid source and the fluid connector may include a flow meter to measure the amount of fluid introduced into chamber 125. In one example, a valve connector (valve connector 131) and a flow meter, if present, may be electrically connected to controller 109 that includes non-transitory machine-readable instructions to introduce a certain volume of fluid into chamber 125 through the valve connector. The introduced fluid may be at an elevated temperature (e.g., 80°F to 120°F) when introduced or heated by, for example, a heater in the reservoir of chamber 125. Also extending from chamber 125 through a base wall of body 120 is drain 121 (see **Figure 4**) that may serve as a drain to drain the fluid contents of the reservoir in chamber 125. Drain 121 may include a valve outside chamber 125. In one example, the drain valve may be electrically connected to controller 109 that includes non-transitory machine-readable instructions to actuate the drain valve (open, close).

As noted above, it may be desirable in certain instances to raise a temperature in reaction station 112 to above ambient. One way this may be done is through the use of slide heater 1802 to heat tray 180. In addition or as an alternative to the use of slide heater 1802, a temperature in chamber 125 may be increased by heating a fluid in a reservoir as described above with respect to generating humidity levels in chamber 125. Another heating technique may include one or more heaters positioned on the sidewall(s) of body 120 within chamber 125 to heat the ambient area around tray 180. Examples include resistive electrical heaters or infrared heaters positioned within chamber 125. A still further technique is a heat jacket wrapped around an exterior of body 120 to heat chamber 125 from outside the chamber. The heat source(s) may be connected to controller 109 allowing machine-readable, non-transitory instructions associated with the controller to control the heat source(s) and control a temperature in chamber 125.

**Figure 1** representatively shows 30 reaction stations 112 arranged in a planar (an xz plane) in a 15x2 configuration. A first of the two rows shows reaction stations 112 each having lid 130 in a second (closed or covered) position. A second of the two rows shows reaction stations 112 with their individual lids in an open position. Each reaction station 112 may be connected to platform 105 of reaction compartment 104 of housing 102.

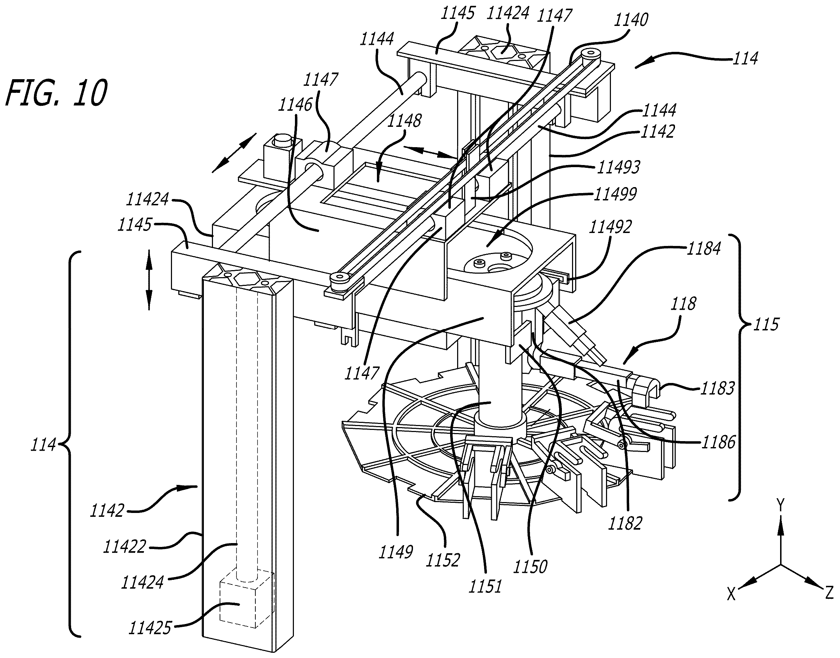

Referring to **Figure 1****,** in addition to reaction stations 112, reaction compartment 104 of housing 102 of processing system 100 also includes gantry 114 that supports carousel 115. Gantry 114 and carousel 115 collectively describe a carousel assembly. **Figure 10** shows a perspective left side view of the carousel assembly in isolation. Gantry 114 includes two vertical (y-direction) posts 1142 connected to a base of reaction compartment 104. Vertical posts 1142 are separated by an x-direction distance greater than a distance covered by a row of reaction stations 112 in reaction compartment 104. Disposed between vertical posts 1142 at a position above reaction stations 112 are two horizontal supports 1144. Horizontal supports 1144 are representatively each cylindrically shaped and extend the x-direction distance of vertical posts 1142 and are each parallel to a base of reaction compartment 104. Horizontal supports 1144 are connected to vertical posts 1142 by end brackets 1145 (e.g., inverted L-shaped brackets). Horizontal supports 1144 are separated by a z-direction distance chosen for a z-direction travel of carousel 115 as will be detailed below. Connected to each of horizontal supports 1144 between end brackets 1145 is U-shaped bracket 1146 (e.g., an inverted U-shape as viewed). U-shaped bracket 1146 includes two legs separated by a base. Horizontal supports 1144 are connected to the base by linear bearings 1147. Linear bearings 1147 are connected to an upper or exposed side of the base of U-shaped bracket 1146 and allow U-shaped bracket 1146 to move in an x-direction on horizontal supports 1144. A base of U-shaped bracket 1146 includes opening 1148 therethrough, such as a rectangular-shaped opening. Also connected at one end of the upper or exposed side of the base of U-shaped bracket 1146 is tab 11493. Tab 11493 projects upward (in a y-direction) from the base. Tab 11493 is connected to timing belt 1140 that is used to move U-shaped bracket 1146 in an x-direction (longitudinal direction).

Connected to the base of U-shaped bracket 1146 below horizontal supports 1144 is transversal drive support bracket 1149. Transversal drive support bracket 1149 is U-shaped (e.g., an inverted U-shape as viewed) defined by a base and sidewalls. A top side of transversal drive support bracket 1149 as viewed has opening 11499 therethrough. The base of transversal drive support bracket 1149 has a x-direction width that is less than a corresponding width of the base of U-shaped bracket 1146 so that the sidewalls of transversal drive support bracket 1149 are positioned between the sidewalls of U-shaped bracket 1146 and the sidewalls of transversal drive support bracket 1149 are connected to the respective sidewalls of U-shaped bracket 1146 via, for example, screws, rivets, or welds. On an inside of each of the sidewalls of transversal drive support bracket 1149 is a transversal linear guide that extends a z-direction length of the sidewalls or 70 percent to 90 percent of the z-direction length. Each transversal linear guide 11492 is at a similar y-direction distance from an end of a sidewall connected to the sidewall by, for example, screws, rivets, or welds. Carousel 115 is connected to each transversal linear guide 11492.

Carousel 115 can move in three directions on gantry 114. Carousel 115 can move in an x-direction (longitudinal) with the movement of U-shaped bracket 1146. Carousel 115 can move in a y-direction (vertical) with the movement of end brackets 1145 up or down vertical posts 1142. Carousel 115 may move in a z-direction (transversal) with the movement of carousel 115 along each transversal linear guide 11492 in transversal drive support bracket 1149.

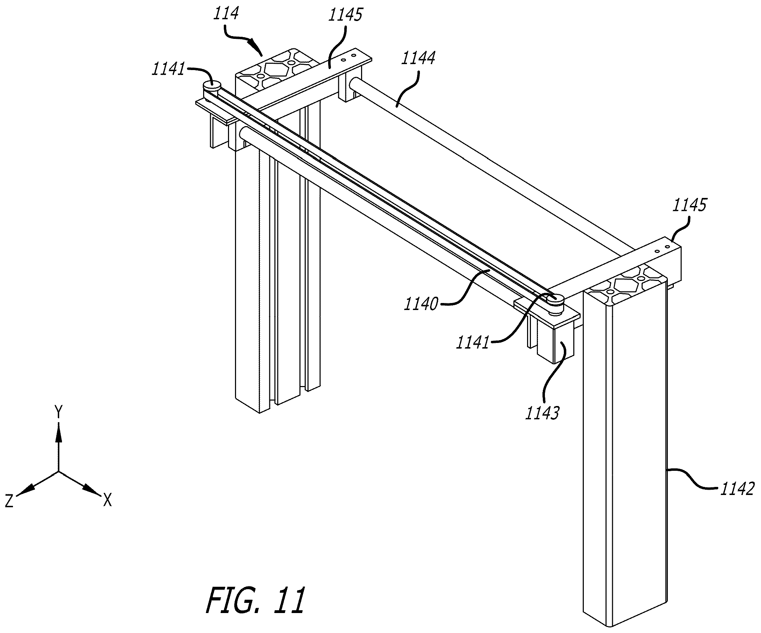

**Figure 11** shows a perspective right side view of a portion of gantry 114 to illustrate the x-direction (longitudinal) drive mechanism. In this view, gantry 114 includes horizontal supports 1144 connected to vertical posts 1142 by end brackets 1145. Connected to the top of each end bracket on one side of gantry 114 (left side as viewed in **Figure 11**) are gears 1141 that rotate in an xz plane. One of gears 1141 is connected to a shaft of motor 1143 with the motor operable to rotate the one gear in a clockwise or counterclockwise direction. Disposed around gears 1141 and extending above one of horizontal supports 1144 is timing belt 1140. Timing belt 1140 is operable to move in an x-direction (longitudinal direction) by gears 1141. Timing belt 1140 is connected to tab 11493 attached to U-shaped bracket 1146 via screws, rivets, pins, etc. (see **Figure 10**). The connection of timing belt 1140 to U-shaped bracket 1146 allows motor 1143 to move U-shaped bracket 1146 and, consequentially, transversal drive support bracket 1149 and carousel 115 in an x-direction (longitudinal direction).

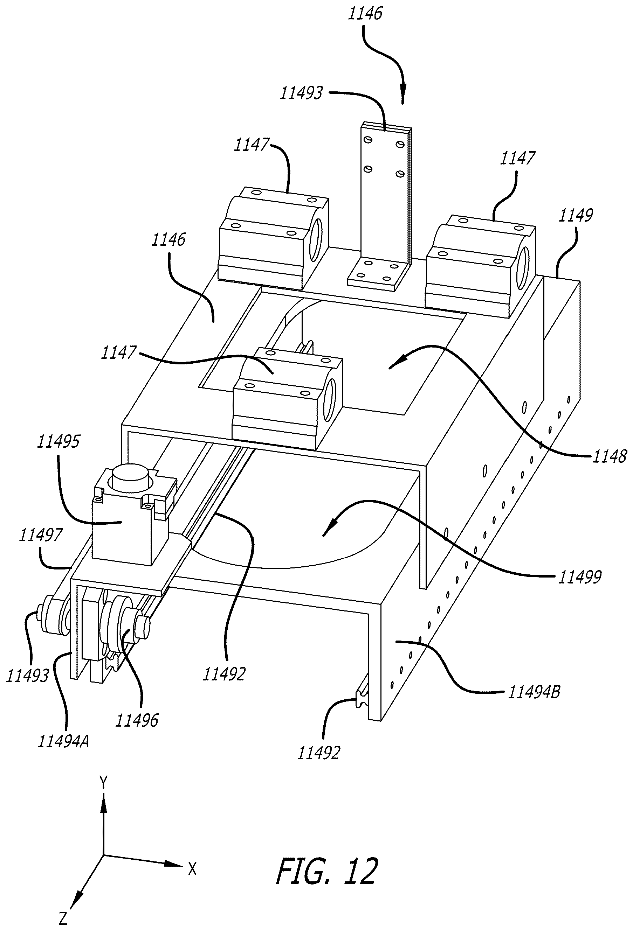

**Figure 12** shows a perspective rear side view of U-shaped bracket 1146 and transversal drive support bracket 1149 in isolation. **Figure 12** shows linear bearings 1147 are connected to an upper or exposed side of the base of U-shaped bracket 1146. Linear bearings 1147 support horizontal supports 1144. Three linear bearings 1147 are shown with one linear bearing on one end of U-shaped bracket 1146 to support one horizontal support 1144 and two linear bearings 1147 on an opposite end of the base to support the other horizontal support 1144, with the z-direction separation of the one linear bearing from the two linear bearings equivalent to a z-direction distance between horizontal supports 1144 (see **Figure 10**). A base of U-shaped bracket 1146 includes opening 1148 therethrough, such as a rectangular-shaped opening, between the one linear bearing 1147 and the two linear bearings 1147. Also connected at one end of the upper or exposed side of the base of U-shaped bracket 1146 is tab 11493. Tab 11493 projects upward (in a y-direction) from the base. Tab 11493 is connected to timing belt 1140 that is used to move U-shaped bracket 1146 in an x-direction (longitudinal direction) (see **Figure 10**).

**Figure 12** also illustrates the z-direction (transversal) drive mechanism. **Figure 12** shows transversal drive support bracket 1149 connected to U-shaped bracket 1146 and positioned under the U-shaped bracket. On an inside of each of sidewall 11494A and sidewall 11494B of transversal drive support bracket 1149 is a transversal linear guide that extends a portion of the z-direction length of the sidewalls of transversal drive support bracket 1149 (e.g., 70 percent to 90 percent of the z-direction length). Each transversal linear guide 11492 is at a similar y-direction distance from an end of a sidewall (sidewalls 11494A and 11494B) connected to the sidewall by, for example, screws, rivets, or welds.

The z-direction (transversal) drive mechanism illustrated in **Figure 12** also includes two gears 11493 connected to the exterior of sidewall 11494A of transversal drive support bracket 1149 (left sidewall as viewed). In **Figure 12****,** only one of two gears 11493 can be viewed at one end (a rear end) of sidewall 11494A of transversal drive support bracket 1149. A second of two gears 11493 is located at the opposite end (a front end) of sidewall 11494A of transversal drive support bracket 1149. Each of two gears 11493 rotates in yz plane. One of two gears 11493 is connected to worm gear 11496 that is rotated by a shaft of motor 11495 with motor 11495 operable to rotate in a clockwise or counterclockwise direction. Disposed around gears 11493 and extending along sidewall 11494A of transversal drive support bracket 1149 is timing belt 11497. Timing belt 11497 is operable to move in an z-direction (transversal direction) by gears 11493.

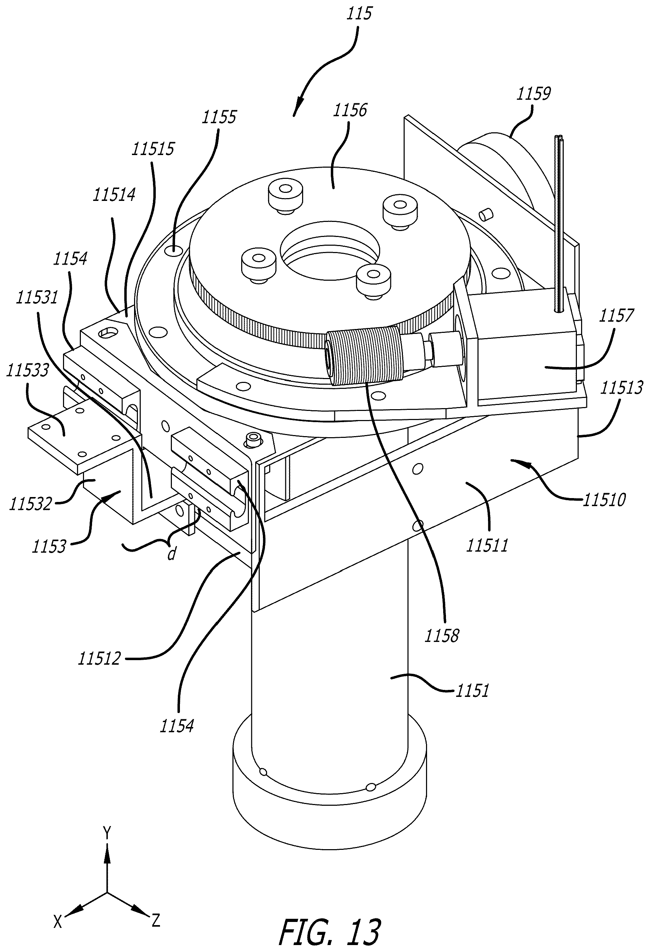

**Figure 13** is a perspective rear side view of a portion of carousel 115. Illustrated in this view is a portion of carousel 115 that connects to transversal drive support bracket 1149 of gantry 114. Carousel 115 includes rectangular shaped main bracket 11510 having a length dimension (x dimension) and a width dimension (z dimension) defined by opposing pairs of sidewalls to be positioned within transversal drive support bracket 1149. Sidewall 11511 and sidewall 11514 define a length dimension and sidewall 11512 and sidewall 11513 define a width dimension. Main bracket 11510 also includes top portion 11515 connected to each sidewall and having an opening therethrough for column 1151. Connected to sidewall 11512 of main bracket 11510 is z-shaped bracket 1153 having base 11531 projecting horizontally away (x direction) a distance, d, from sidewall 11512; midportion 11532 projecting vertically (y direction); and apex 11533 projecting horizontally away (x direction) from midportion 11532. The projection of z-shaped bracket 1153 away from sidewall 11512 a distance, d, allows midportion 11532 and apex 11533 to be positioned on an exterior side of a sidewall of transversal drive support bracket 1149 (sidewall 11494A) when main bracket 11510 is positioned within transversal drive support bracket 1149. Timing belt 11497 (see **Figure 12**) is connected to apex 1153 (via, for example, screws, rivets, pins, etc.) which allows motor 11495 to move main bracket 11510 of carousel 115 in a z-direction (transversal direction). Also attached to sidewall 11512 are transversal slide bearings 1154 operable to engage with transversal linear guide 11492 connected to an inside of sidewall 11494A of transversal support bracket 1149 (see **Figure 12**). Projecting outward from sidewall 11513 (opposite sidewall 11512) is roller 1159. Roller 1159 is operable to engage and rotate in a yz plane within transversal linear guide 11492 of sidewall 11494B of transversal drive support bracket 1149.

As noted, main bracket 11510 includes top portion 11515 having an opening therethrough for column 1151. Column 1151 includes cut or inserted teeth around a top portion thereof. Disposed on top portion 11515 of main bracket 11510 is slew bearing 1155. Slew bearing 1155 includes an outer ring and an inner ring, the inner ring incorporating a gear with cut or inserted teeth that mesh with the teeth around a top portion of column 1151. Disposed on a top surface of slew bearing 1155 and connected thereto is gear 1156. Gear 1156 is operable to rotate in a xz plane and to rotate the inner ring of slew bearing 1155 in the same plane and consequently rotate column 1151. Main bracket 11510 remains stationary (does not rotate). Gear 1156 is rotated by motor 1157. Motor 1157 is mounted to top portion 11515 of main bracket 11510 and has a shaft extending therefrom that rotates in a yz plane. The shaft is connected to worm gear 1158 that meshes with gear 1156 to rotate gear 1156 in an xz plane. Referring to **Figure 10****,** a base of column 1151 of carousel 115 includes pedestal or cartridge carrier plate 1152 that is operable to engage and contain a number of reagent cartridges. Rotation of column 1151 by motor 1157 rotates pedestal 1152.

Referring again to **Figure 10****,** gantry 114 includes two vertical posts 1142. Vertical posts 1142 are shown with rectangular housing 11422 disposed around lead screws 11424. Each lead screw 11424 is connected to a respective end bracket 1145 and is driven (rotated clockwise or counterclockwise) by a respective stepper motor (motor 11425) with one stepper motor slaved to the other. The rotation of the lead screws 11424 provides y-direction movement of end brackets 1145 and, correspondingly, horizontal supports 1144 and carousel 115.

As noted above, carousel 115 can move in three directions on gantry 114. Carousel 115 can move in an x-direction (longitudinal) with the movement of U-shaped bracket 1146 by motor 1143. Carousel 115 can move in a y-direction (vertical) with the movement of end brackets 1145 up or down vertical posts 1142 by stepper motors 11425. Carousel 115 may move in a z-direction (transversal) with the movement of carousel 115 along each transversal linear guide 11492 in transversal drive support bracket 1149 driven by motor 11495. Each of motor 1143, stepper motors 11425 and motor 11495 is controlled by non-transitory machine-readable instructions in controller 109 that direct their operation (e.g., direction of rotation, run time, etc.).

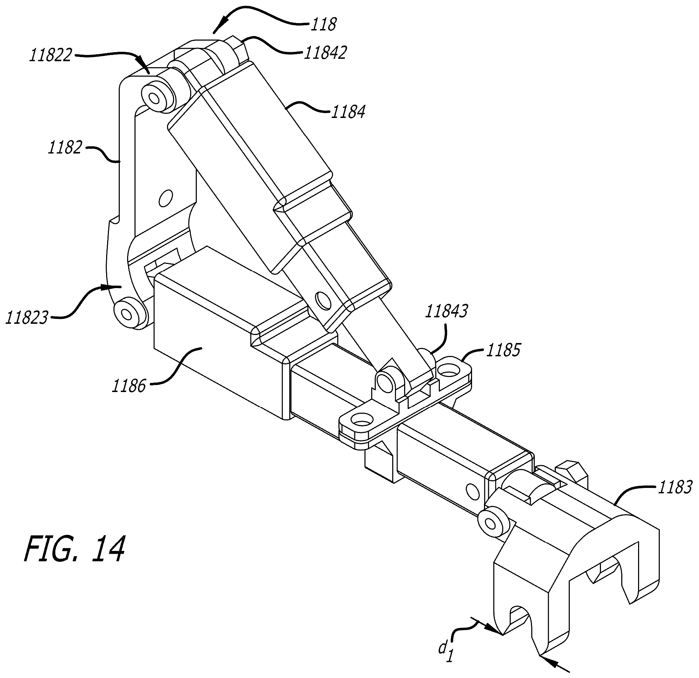

Carousel 115 is operable to automatically load/unload and engage or accommodate/disengage or disaccommodate a number of reagent cartridges on pedestal 1152. Referring to **Figure 10****,** carousel 115 can automatically load/unload reagent cartridges through the use of arm assembly 118. **Figure 14** shows a side perspective view of arm assembly 118 isolated from gantry 114 and carousel 115. Arm assembly 118 includes attachment bracket 1182 mounted via, for example, bolts, screws, rivets or pins to exterior surface of sidewall 11511 of main bracket 11510 (e.g., mounted at a midpoint of sidewall 11511 (see **Figure 13**)). Connected to a top of attachment bracket 1182 is short actuator 1184 and to a bottom of attachment bracket 1182 is long actuator 1186. In **Figure 10****,** long actuator 1186 projects approximately perpendicularly (horizontally as viewed) from attachment bracket 1182 and short actuator 1184 projects approximately diagonally (e.g., projects at a 45 degree angle) from attachment bracket 1182 to connect with long actuator 1186. Connected to an end of long actuator 1186 is cartridge engagement head 1183. Cartridge engagement head 1183 has pairs of fingers on opposite sides thereof that are separated by a distance, d₁, that allows the fingers to surround a protrusion of a reagent cartridge (described below) and engage and move the reagent cartridge.

**Figure 14** shows a top portion of attachment bracket 1182 includes clevis portion 11822 and a bottom portion includes clevis portion 11823. One end of short actuator 1184 is connected to clevis portion 11822 with, for example, clevis pin, screw or bolt in a manner that it can rotate about the pin, screw or bolt. Similarly, one end of long actuator 1186 is connected to clevis portion 11823 with, for example, clevis pin, screw or bolt in a manner that it can rotate about the pin, screw or bolt. Each of short actuator 1184 and long actuator 1186 includes an electrically actuated telescoping body (e.g., a three-stage body of successively smaller cylinders or pillars). A second end of short actuator 1184 is connected to the smallest stage or plunger of long actuator 1186 through linkage 1185. Linkage 1185 is proximal to engagement head 1183. The connection position of short actuator 1184 to long actuator 1186 is selected such that when short actuator 1184 is fully retracted, short actuator 1184 will rotate long actuator 1186 a few degrees (e.g., up to 10 degrees, such as 2 degrees to 8 degrees) about clevis portion 11823 causing a distal end of long actuator 1186 including engagement head 1183 to move toward clevis portion 11822 (to be lifted). Long actuator 1186 can be extended in the lifted configuration to a position over a reagent cartridge. Short actuator 1184 can then be extend to rotate long actuator 1186 in an opposite direction (i.e., rotate long actuator away from clevis portion 11822) to lower engagement head 1183 onto a reagent cartridge to grasp the reagent cartridge.

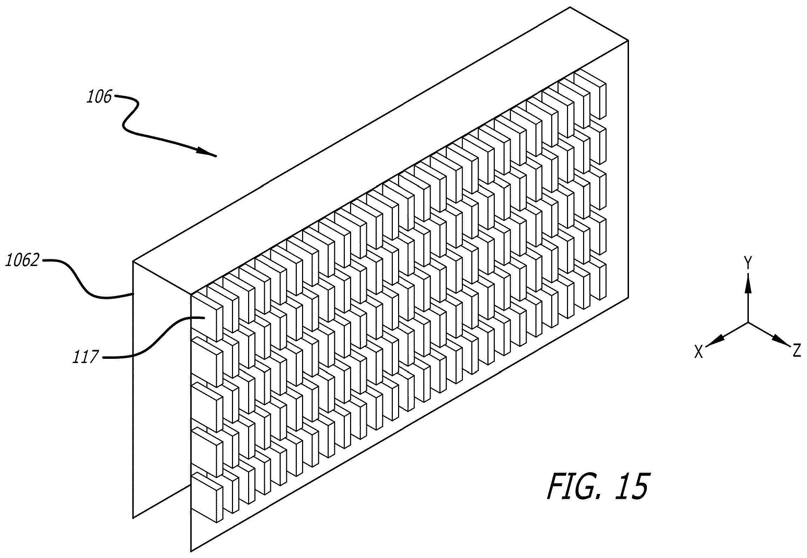

As noted above and illustrated in **Figure 1****,** sample processing system 100 includes housing 102 for enclosing and storing various components of processing system 100 including storage rack 106. Storage rack 106 may be used to store reagent cartridges (e.g., reagent cartridge 117). **Figure 15** shows a perspective front left side view of storage rack 106 isolated from other components of housing 102. Storage rack 106 includes housing 1062 that includes slots facing reaction compartment 104 and carousel 115. Storage rack 106 contains an array of slots to store individual reagent cartridges. **Figure 15** shows an array of five rows and 25 to 30 columns of slots. An array of rows and columns allows each slot to have an address (e.g., designated by row and column number) so that the system can know a location of a reagent cartridge and find a reagent cartridge in storage rack 106 or return a reagent cartridge to a particular slot in storage rack 106. In **Figure 15****,** reagent cartridges (reagent cartridge 117) are seated in all slots of the array. An exterior surface of each reagent cartridge may contain an identifier such as a barcode that contains identifying information about the reagent contained in the reagent cartridge and possibly other information such as an expiration date. The identifier may be read by a reader (e.g., a barcode reader) and the read information electronically provided to controller 109. One example is a reader on carousel 215 that is electronically linked to controller 109. An identifier on a reagent cartridge (e.g., reagent cartridge 117) can have a rewritable IC chip which can store the identity of the reagent, a lot number, an expiration date, and usage count.

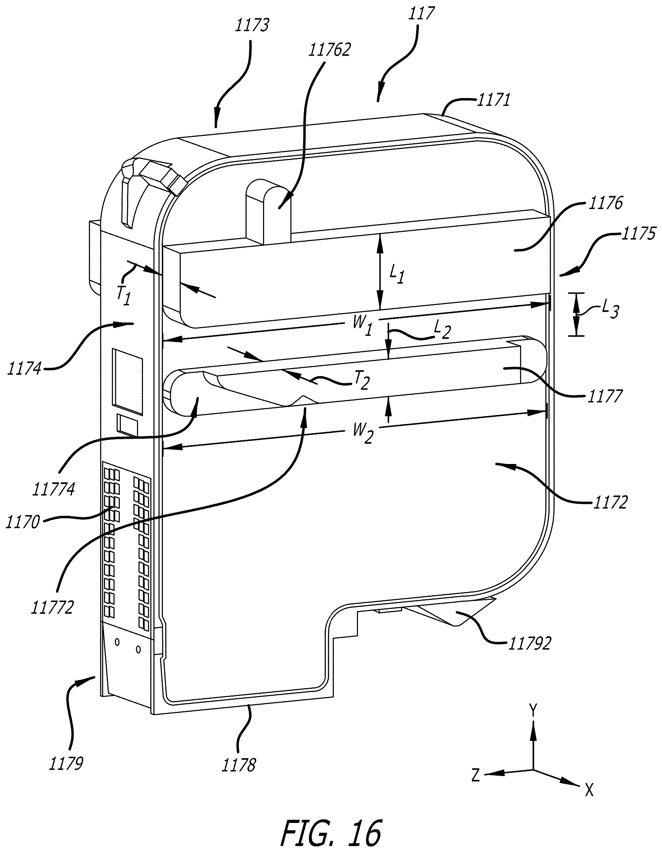

**Figure 16** shows a side perspective view of reagent cartridge 117 that is representative of reagent cartridges operable for storage in storage rack 106 and use in processing system 100. Representatively, reagent cartridge 117 has a z-direction depth on the order of 67.4 millimeters (mm), an x-direction width of 5 mm to 10 mm and a y-direction height of 98.5 mm. In another example, reagent cartridge 117 has a similar depth and width and a height of 70.8 mm (H₂ is less than H₁). Reagent cartridge 117 may be drop on demand-type cartridge, such as a thermal drop-on-demand type cartridge or a piezoelectric drop-on-demand type cartridge with the reagent cartridge including an individual dedicated printhead positioned at a base of reagent cartridge 117 as viewed.

Reagent cartridge 117 may contain a volume of a reagent and have a dedicated printhead. Each cartridge may be a single use cartridge. A single use cartridge in this context means that once the volume of the reagent in the cartridge is dispensed or used, the cartridge including its printhead is to be discarded or disposed of as opposed to being resupplied with a volume of reagent. A reagent cartridge may include (be supplied with) a volume of a reagent suitable for dispensing the reagent on one or more than one sample (e.g., tissue sample) on a slide. An example of a single use cartridge is a thermal inkjet cartridge. Another example is a piezoelectric inkjet cartridge. Referring to **Figure 16****,** reagent cartridge 117 includes outer shell or body 1171 having a generally rectangular shape constructed of a plastic material (e.g., a hard plastic or polymer). **Figure 16** shows reagent cartridge 117 including side 1172 and opposite side 1173 that represent yz-dimensions as well as side 1174 and opposite side 1175 that represent xy-dimensions. Side 1174 contacts and engages with carousel 115. Reagent cartridge 117 includes printhead 1178 operable to discharge a reagent from the cartridge. Printhead 1178 may be positioned at or near snout or base 1179 of reagent cartridge 117 (a bottom side as viewed) so that when the reagent cartridge is inserted in carousel 115, the ejection of reagent occurs through base 1179 of the reagent cartridge. The portion of snout or base 1179 including printhead 1178 (a printhead area) may extend below a remainder portion of base 1179 in a step-like manner. Printhead 1178 of reagent cartridge 117 includes a nozzle or an array of nozzles through which reagent is ejected or discharged representatively through a thermal inkjet process. A representative array of nozzles is a linear array (e.g., a single row or multiple rows) of nozzles allowing discharge of a reagent in a line(s) or row(s), such as across a slide. In a thermal inkjet printhead, heat may be used to create an air bubble of reagent vapor that is exploded as it is forced through a printhead nozzle. Each nozzle may have a diameter on the order of 20 microns to 80 microns, such as 20 microns to 50 microns.

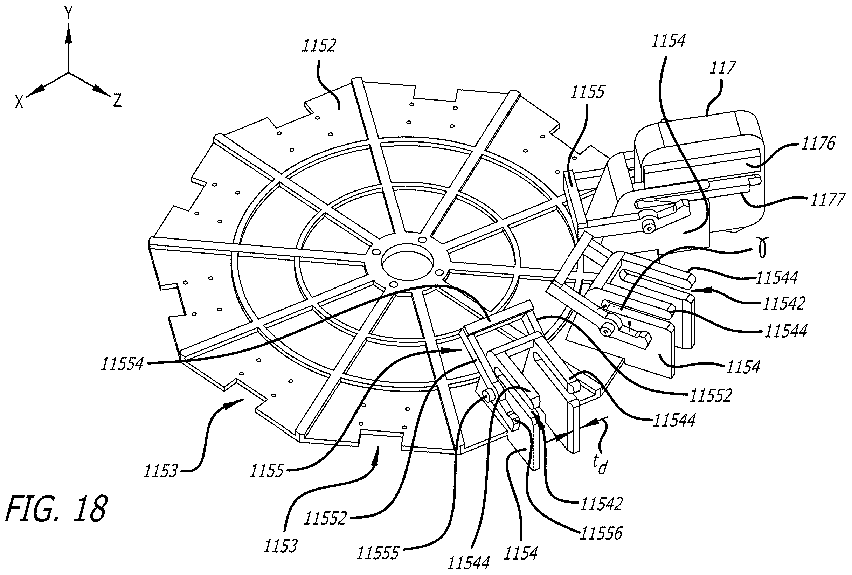

Reagent cartridge 117 also includes contacts 1170 on side 1174. Contacts 1170 are designed to mate with contacts in docks associated with a carousel (see **Figure 18**) and the associated text). Contacts 1170 allow reagent cartridge to be controlled by controller 109 regarding, for example, discharge or firing of reagent through nozzles and the amount of reagent discharged.

Reagent cartridge 117 shown in **Figure 16** includes a pair of transfer guides on each of side 1172 and side 1173. The transfer guides on side 1172 are described, but it is appreciated that the transfer guides on side 1173 are similar. Transfer guide 1176 has a generally rectangular solid structure of, for example, a plastic material and has a width, W₁, that extends across the width of side 1172 parallel to a top surface of reagent cartridge 117. Transfer guide 1176 has a thickness, T₁, and length, L₁, sufficient to support reagent cartridge 117 in storage rack 106. A representative thickness, T₁, is on the order of 0.2 millimeter (mm) to 1 mm and a representative length, L₁, is on the order of 3 mm to 10 mm. Transfer guide 1176 includes engaging protrusion 11762 that projects vertically upward as viewed from a top side of the transfer guide. As illustrated, transfer guide 1176 is connected to the body 1171 (e.g., via adhesive) or is part of body 1171 a distance from a top of side 1172 as viewed such that the entirety of transfer guide 1176 including engaging protrusion 11762 is below the top surface of reagent cartridge 117. Transfer guide 1177 is connected to body 1171 (e.g., via adhesive) or is part of body 1171 of reagent cartridge 117 at a position below transfer guide 1176 as viewed. Transfer guide 1177 has a width, W₂, that extends across the width of side 1172 parallel to a top surface of reagent cartridge 117, a thickness, T₂, and length, L₂, sufficient to support reagent cartridge 117 in storage rack 106. A representative thickness, T₂, is similar to a thickness, T₁, of transfer guide 1176, e.g., on the order of 0.2 mm to 1 mm and a representative length, L₂, is on the order of 3 mm to 8 mm. Transfer guide 1177 is arranged parallel to transfer guide 1176 along side 1172 and is separated from transfer guide 1176 by a gap, L₃, sufficient for an arm of a cartridge support to slide between the transfer guides. Each of transfer guide 1176 and transfer guide 1177 may have a rounded or curved front end (end closest to side 1174 of reagent cartridge 117) to aid the positioning of an arm of a cartridge support between the transfer guides. A base of transfer guide 1177 also includes notch or docking groove 11772 as well as thinned portion 11774 (thickness less than a thickness, t₂) from the front end of transfer guide to a point just forward (1 mm or 2 mm forward) of notch or docking groove 11772. Thinned portion 11774 may have a rear angled sidewall from the top of transfer guide 1177 toward the base. Finally, reagent cartridge 117 includes frame locking bump 11792 that is a triangular prism with triangular bases parallel with side 1172 and 1173, respectively. Each of transfer guide 1176, transfer guide 1177 and frame locking bump 11792 may be made of a hard plastic material that is either attached to reagent cartridge 117 by, for example, adhesive, or is part of reagent cartridge 117 formed, for example, by way of a mold process.

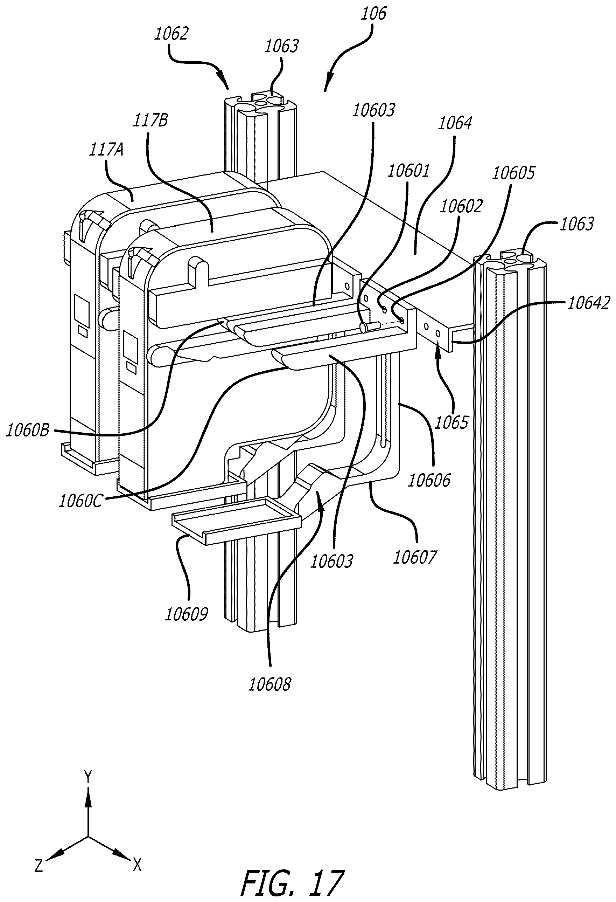

**Figure 17** shows a perspective front right side view of a portion of storage rack 106. In this view, storage rack 106 includes cartridge frame support 1064 extending between vertical posts 1063. Storage rack 106 is mounted to housing 102 with slots facing reaction compartment 104 and carousel 115. Cartridge frame support 1064 is an L-shaped body with base 10642 of the L-shaped body facing outward. Disposed in base 10642 of frame support 1064 are pairs of openings or holes 1065 through base 10642 that will be used to secure reagent cartridges to frame support 1064. **Figure 17** shows reagent cartridge 117A and reagent cartridge 117B connected to cartridge frame support 1064. Reagent cartridges are connected to cartridge frame support 1064 utilizing a cartridge frame. **Figure 17** shows cartridge frame 1060B supporting reagent cartridge 117B and cartridge frame 1060C connected to cartridge frame support 1064 but not supporting a reagent cartridge. It is appreciated that a separate cartridge frame is supporting reagent cartridge 117A but such cartridge frame is blocked from view.

Each cartridge frame (e.g., cartridge frame 1060B and cartridge frame 1060C) includes shoulder 10602 that is a relatively thin (e.g., 1 mm to 3 mm) rectangular body that has an x-direction length greater than a width of a reagent cartridge. Shoulder 10602 has two openings or holes 10605 that can be aligned with pairs of openings or holes 1065 in base 10642 of frame support 1064 to allow shoulder 10602 to be connected to base 10642 of cartridge frame support 1064 through the use of pins 10603. Pins 10601 are, for example, expander pins (e.g., plastic) with a distal end and body that projects from the cartridge frame and the distal end is operable to slide into an opening or hole 1065 and the body having a similar or greater diameter than the opening or hole to secure the pin through the application of a force in the direction of base 10642 of cartridge frame support 1064. Pins 10601 may be captive pins, meaning the pins are permanently secured to the cartridge frame, or may be free to be introduced into both shoulder 10602 of the cartridge frame and base 10642 of cartridge frame support 1064. Each cartridge frame (e.g., cartridge frame 1060B and cartridge frame 1060C) is designed to be removable from base 10642 of cartridge frame support 1064 through the use of a similar but opposite force required to insert the pins.

Projecting perpendicularly from shoulder 10602 as viewed (x-direction) are two arms 10603. Each arm 10603 has dimensions (e.g., a y-direction height and x-direction thickness) that allows an arm to fit between transfer guide 1176 and transfer guide 1177 on each side of a reagent cartridge in a manner that the reagent cartridge can slide into and out of the cartridge frame. Arms 10603 are separated from one another by a distance slightly greater than a width of a reagent cartridge (e.g., where a reagent cartridge has a width of 6 mm, arms 10603 are separated from one another by 6.3 mm to 7 mm). Arms 10603 have a length (z-direction) measured from shoulder 10602 of less than a depth of a reagent cartridge, such as a length approximately one-half the depth of a reagent cartridge. Projecting vertically downward as viewed from shoulder 10602 (y-direction), each cartridge frame includes spine 10606. Spine 10606 has a representative width (x-direction) on the order of 1 mm to 4 mm, a thickness (z-direction) on the order of 0.4 mm to 0.5 mm and a length (y-direction) that is longer than a height of a portion of reagent cartridge measured between a base of the reagent cartridge behind the printhead area and a bottom of transfer guide 1177 thereon, such as a 1 mm to 2mm longer. Projecting perpendicularly from a base of spine 10606 (z-direction) is leg 10607. A shape at the spine-leg interface may mirror a transition of a rear sidewall and a base of a reagent cartridge. In **Figure 17****,** a transition of a rear sidewall and a base of reagent cartridge 117B is curved and the spine-leg interface defines an opposite profile. Leg 10607 may have a thickness (y-direction) on the order of 0.5 mm to 1.5 mm; a width (x-direction) of 1 mm to 3 mm; and a length (z-direction) that extends a length of a base of a reagent cartridge exclusive of the printhead area. Disposed along a portion of the length dimension of leg 10607 is protuberance 10608 that projects upward from a surface of leg 10607 representatively 0.2 mm to 0.6 mm and has a representative shape of a triangular prism with triangular bases in a yz plane. Protuberance 10608 is located on leg 10607 a distance from spine 10606 that is greater than a distance from the rear side of a reagent cartridge (reagent cartridge 117, **Figure 16**) to a forward edge of frame locking bump 11792 so that when a reagent cartridge is positioned in cartridge frame (e.g., reagent cartridge 117B in cartridge frame 1069B), protuberance 10608 is forward of the frame locking bump projecting from a base of the cartridge. Connected at an end of leg 10607 of a cartridge frame is pad platform 10609. Pad platform 10609 may be rectangular body having a rectangular face or top (xz plane) that is larger than a printhead area. A representative area (xz dimensions) for pad platform is on the order of 225 mm² to 400 mm². Disposed on the face or top of pad platform 10609 may be an absorbent material (e.g., sponge) that can contact a printhead of a reagent cartridge, accept outflow from the printhead (e.g., excess reagent on a surface of printhead), and protect the printhead from drying out.

A body of a cartridge frame (e.g., cartridge frame 1060B, cartridge frame 1060C) may be made of a hard plastic material. Referring to **Figure 17****,** spine 10606 and leg 10607 may have dimensions (e.g., thickness, width) and/or a connection (e.g., 90° junction) that provide leg 10607 with a spring tension so that leg 10607 may move when a reagent cartridge is connected or removed. As noted above, a reagent cartridge includes frame locking bump 11792 projecting from its base (see reagent cartridge 117, **Figure 16**). When a reagent cartridge is placed into a cartridge frame (i.e., in response to a force applied to the reagent cartridge in a direction toward spine 10606 of the cartridge frame), arms 10603 of the cartridge frame slide between transfer guides 1176 and 1177 on respective opposing sides of the cartridge until frame locking bump 11792 at the base of the reagent cartridge contacts protrusion 10608. Continued force in a direction toward spine 10606 will cause leg 10607 to move downward (by the force of frame locking bump 11792 on the leg) causing protrusion 10608 to be moved downward and frame locking bump 11792 to pass protrusion 10608. Once frame locking bump 11792 is past protrusion 10608, leg 10607 will return to its original position (move upward) allowing protrusion 10607 to secure or capture the reagent cartridge in the cartridge frame. Separating a reagent cartridge from a cartridge frame is achieved in a similar manner. A force on the reagent cartridge in a direction away from spine 10606 will cause leg 10607 to move downward (by the force of frame locking bump 11792 on the leg) causing protrusion 10608 to be moved downward and frame locking bump 11792 to pass protrusion 10608.

Reagent cartridges (e.g., reagent cartridge 117A, reagent cartridge 117B) may be provided as an assembly including the reagent cartridge and the cartridge frame (e.g., cartridge frame 1060B, cartridge frame 1060C). The assembly may be provided to a consumer together in a package with the reagent cartridge in the cartridge frame or separate and with instructions for assembly.

Referring to **Figure 10****,** **Figure 14****,** **Figure 15** and **Figure 17****,** arm assembly 118 may be used to move reagent cartridges into and out of storage rack 106. As one example, a reagent cartridge assembly (reagent cartridge connected to cartridge frame) may be delivered to reaction compartment 104 (e.g., delivered to platform 105 inside reaction compartment 104) by an operator or a robot. Controller 109 includes non-transitory, machine-readable instructions that direct an operation of the various motors (e.g., direction of rotation, run time, etc.) to bring carousel 115 including arm assembly 118 to a position to grasp a delivered reagent cartridge assembly and place that reagent cartridge assembly in storage rack 106. These motors include motor 1143 that moves carousel 115 in an x-direction; motor 11495 that moves carousel 115 in a z-direction; motor 11425 that moves carousel 115 in a y-direction; and motor 1157 that rotates pedestal 1152. When carousel 115 is positioned as desired, the machine-readable instructions also include instructions to direct arm assembly 118 connected to carouse 115 to grasp the reagent cartridge assembly and transport the reagent cartridge assembly to storage rack 106. The instructions may further include instructions to place the reagent cartridge assembly at a predetermined address in storage rack 106. Arm assembly 118 includes cartridge engagement head 1183 at its distal end. Cartridge engagement head 1183 is operable based on instructions from controller 109 to be brought to a position over reagent cartridge 117 so that the pairs of fingers extending from cartridge engagement head 1183 surround and engage engagement protrusion 11762 of transfer guide 1176 on each side of reagent cartridge 117 (see **Figure 16**). The pairs of fingers on cartridge engagement head 2183 of arm assembly 218 (see **Figure 14**) may be spaced (separated) on opposite sides by a distance that is slightly less than a distance between engagement protrusions 21762 on each side of reagent cartridge 217. Representatively, the pairs of fingers on cartridge engagement head 2183 are biased to their separated distance but can flex outward a greater distance to engage engagement protrusions 21762 on opposite sides of reagent cartridge 217. The biased nature of the opposing fingers on cartridge engagement head 2183 act like a spring clamp to hold a reagent cartridge by engagement protrusions 21762. To place the reagent cartridge assembly into storage rack 106, the instructions direct arm assembly 118 to align pins 10603 in the cartridge assembly with a determined pair of openings or holes 10605 in base 10642 of frame support 1064 and apply enough force to the reagent cartridge assembly to insert the pins in the corresponding in base 10642 of frame support 1064.

To transfer a reagent cartridge from storage rack 106 to carousel 115, controller 109 includes machine-readable instructions that direct arm assembly to be positioned at a reagent cartridge (e.g., a front side of the reagent cartridge) and to grasp the reagent cartridge (via cartridge engagement head 1183 surrounding and engaging protrusion 11762 of transfer guide 1176 on each side of reagent cartridge 117). At this point, the reagent cartridge assembly including a reagent cartridge and a cartridge frame are mounted in storage rack 106. Once cartridge engagement head 1183 grasps engaging protrusion 11762 of transfer guide 1176 on each side of reagent cartridge 117, arm assembly 118 applies a force in a direction away from storage rack (and away from spine 10606 of the cartridge frame) to deflect leg 10607 of the cartridge frame (cause to move downward) by the force of frame locking bump 11792 of reagent container 117 on leg 10607 causing protrusion 10608 to be moved downward and frame locking bump 11792 to pass protrusion 10608. Once the cartridge is separated from its cartridge frame, instructions associated with controller 109 direct arm assembly 118 to deliver the cartridge to carousel 115.

**Figure 18** shows a portion of carousel 115 including pedestal or cartridge carrier plate 1152 isolated from a base of column 1151. Pedestal or cartridge carrier plate 1152 is operable to engage and contain a number of reagent cartridges. Pedestal 1152 has a representative decagon shape with slots 1153 in each side for a reagent cartridge. It is appreciated that the shape and the number of reagent cartridges that a carousel may accommodate may vary. Surrounding each slot 1153 is dock 1154 that projects from a surface of pedestal 1152 (upper surface as viewed). **Figure 18** shows three docks 1154. It is appreciated that pedestal 1152 may have as many docks as slots. Each dock 1154 is configured to contain a reagent cartridge therein. **Figure 18** shows reagent cartridge 117 stationed in one dock 1154. Each dock 1154 includes a back wall with an exterior surface facing a center of pedestal 1152 and two opposing sidewalls connected to the back wall. The back wall is inclined from top to bottom with the bottom of the back wall closer to a center of pedestal 1152. The sidewalls have a thickness, t_{d}, that is less than a thickness of transfer guides 1176 and 1177 on a reagent cartridge (see **Figure 16**). An upper portion of each sidewall contains a lateral slot 11542 that extends from a distal end of the sidewall to a portion near a proximal end (near but not to the back wall) to define arm portion 11544. Each arm portion 11544 has dimensions to allow arm portion 11544 to be positioned between transfer guides 1176 and 1177 on reagent container 117 and support the reagent container. Dock 1154 including arm portions 11544 may be constructed of a plastic (polymer) material.

An interior surface of a back wall of each dock 1154 includes contacts that mate with contacts 1170 on a reagent cartridge. The contacts are electrically connected to controller 109 allowing controller 109 to individually control a reagent cartridge in each dock 1154 on carousel 115.

Connected to the two opposing sidewalls of each dock 1154 at a point below arm portions 11544 as viewed is cartridge lock 1155. Cartridge lock 1155 includes two parallel arms 11552 separated by shoulder 11554. Shoulder 11554 has a width similar or slightly greater than a width of dock 1154 so that arms 11552 may be positioned and connected to an exterior of respective opposing sidewalls of dock 1154. **Figure 18** shows arm 11552 connected to a sidewall by pin 11555 (for example, a pin, screw or rivet) such that a length of a portion of each arm 11552 from shoulder 11554 to pin 11555 (a distal portion) is greater than a length of a portion of each arm 11552 from pin 11555 to a proximal end (an end furthest from shoulder 11554). The connection of cartridge lock 1155 to dock 1154 is such that shoulder 11554 can pivot upward and downward as viewed without contacting the back wall of dock 1154 (e.g., shoulder 11554 is 0.1 mm to 0.5 mm from an exterior surface of the back wall). A distal portion of each arm 11552 is generally rectangular and projects proximally perpendicularly from shoulder 11554. A proximal portion of each arm 11552 may project at an angle upward relative to the distal portion so that an angle, γ, defined between a distal portion and a proximal portion is on the order of 150° to 175°. A proximal portion of each arm 11552 may be generally rectangular and includes a proximal end having protrusion 11556 that is, for example, an upward projecting triangular prism with triangular bases parallel with the sides of the respective arm. Protrusion 11556 is sized to fit notch or docking groove 11772 in transfer guide 1177 of a reagent cartridge (see **Figure 16**). Cartridge lock 1155 may be biased by a spring at each of pins 1155 with shoulder closer to a surface of pedestal 1152. In this configuration, at least a portion of protrusion 11556 extends above a base of the notches defining arm portions 11544 of each dock 1154. A downward force on protrusion 11556 will cause protrusion to move downward and shoulder to move upward. Releasing such downward force will cause the opposite movement.

A slide identification reader and/or an imager, such as a camera, may be connected to pedestal or cartridge carrier plate 1152. Representatively, a slide identification reader/imager can be placed in one of slots 1153 instead of a dock and cartridge. Alternatively, a slide identification reader/imager may be connected to an underside of carrier plate 1152. A slide identification reader may be oriented to read an identifier (e.g., a label (e.g., a barcode)) on a microscope slide while an imager may be oriented to capture an image of a microscope slide (such as an image of an entire microscope slide, an image of an identifier on the microscope slide (e.g., for subsequent reading by, for example, controller 109) and/or an image of a sample on the microscope slide when the microscope slide is visible in chamber 125 of body 120 or outside chamber 125 (e.g., when lid 130 is moved to an open position and tray 180 to a third or fourth position (see **Figure 7C** and **Figure 7D**)). Reading of an identifier on a microscope slide may be controlled by controller 109 which may direct that an identifier on the microscope slide be read by a slide identification reader and/or an image of the identifier be captured by an imager. Representatively, the reading, or capturing an image and then reading, of an identifier on a microscope slide when the microscope slide is initially placed in a reaction station may allow controller 109 to determine a processing protocol for the sample on the microscope slide. Image capture may be controlled by controller 109 with instructions to, for example, capture an image of an identifier on a microscope slide prior to the microscope slide initially being moved into chamber 125 or to capture an image of a sample on the microscope slide following a dewaxing operation to locate the sample on the microscope slide (e.g., via detecting the sample (e.g., a stained sample)) to determine where to subsequently dispense a reagent (e.g., a primary reagent) and/or after a primary staining operation.

Referring again to **Figure 10****,** **Figure 14** and **Figure 18****,** a transfer of a reagent cartridge by arm assembly 118 from storage rack 106 or from platform 105 inside housing 102 is described. Controller 109 includes non-transitory, machine-readable instructions that include directing arm assembly 118 to engage the reagent cartridge (e.g., reagent cartridge 117) with cartridge engagement head 1183 of arm assembly engaging protrusions 11762 on transfer guides 1176 of the reagent cartridge. Such instructions also include instructions to transport the reagent cartridge to one of docks 1154 on pedestal 1152 of carousel 115 and align transfer guides 1176 and 1177 of the reagent cartridge with arm portions 11554 of one of docks 1154 (align transfers guides 1176 and 1177 respectively above and below each arm portion 11554). Once aligned, the instructions further include instructions to slide the reagent cartridge into arm portion 11554 (in a proximal to distal direction) so that snout or base 1179 of reagent cartridge 117 is inward (e.g., faces a center of pedestal 1152). Arm assembly 118 applies a force in a direction of a center of pedestal 1152 sufficient to slide the reagent cartridge into arm portions 11554. Transfer guide 1177, having a thickness, t_{d}, greater than a thickness, t₂, of transfer guide 1177 will contact a proximal portion of each arm 11552 of cartridge lock 1155 and cause each arm to rotate about each pin 11555 and push the proximal portion of the arm downward. When that portion of transfer guide 1177 that includes dock locking groove 11772 is directly above protrusion 11556 of each arm 11552 of cartridge lock 1155, the bias of cartridge lock will cause each arm 11552 of cartridge lock 1155 to rotate in an opposite direction about pin 11555 and cause protrusion 11556 to engage locking groove 11772. At this point, the reagent cartridge is secured in dock 1154 and the instructions associated with controller 109 will direct arm assembly 118 to release its engagement with each engaging protrusion 11762.

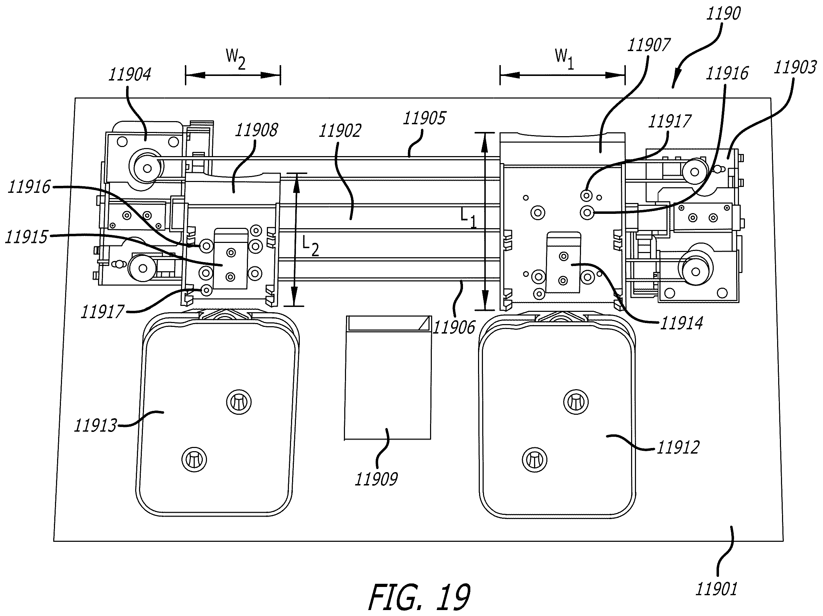

Before a reagent cartridge is delivered to a dock (dock 1154) on carousel 115 for a dispensing operation or returned to storage rack 106 from a dock, the reagent cartridge may go to a service station. **Figure 1** shows service station 1190 adjacent storage rack 106 mounted to a rear sidewall of reaction compartment 104 as viewed. Service station 1190 provides an area where a printhead of a reagent cartridge may be tested and cleaned prior to and/or after use in a dispensing operation to dispense reagent therefrom onto a microscope slide. **Figure 19** shows a front side view of service station 1190. Service station 1190 in this example includes a rear wall 11901. Connected to rear wall 11901 are pulley support 11903 and pulley support 11904. Each of pulley support 11903 and pulley support 11904 include an upper roller and a lower roller. Disposed on the upper roller of each of pulley support 11903 and pulley support 11904 is belt 11905. Disposed on the lower roller of each of pulley support 11903 and pulley support 11904 is belt 11906. Disposed between and connected to each of pully support 11903 and pully support 11904 is rail 11902. Slidably connected to rail 11902 and belt 11905 and belt 11906 is carriage 11907 and carriage 11908. Each of carriage 11907 and carriage 11908 may have a configuration to secure a reagent cartridge similar to dock 1154 (see **Figure 18**).

In the example shown in **Figure 19****,** carriage 11907 has a length, L₁, and a width, W₁, for a reagent cartridge of a first size, such as L₁ of 100 mm and W₁ of 60 mm and carriage 11908 has a length, L₁, and a width, W₁, for a reagent cartridge of a second size, such as L₂ of 72 mm and W₂ of 60 mm. It is noted that service station 1190 may be equipped with only one carriage or, if multiple carriages are included, the carriages may accommodate reagent cartridges of the same or different length and width dimensions. A base or backside as viewed of each of carriage 11907 and carriage 11908 includes electronic contacts or pins operable to mate with receptors (contacts 1170) on a front side of a reagent cartridge similar to the interior surface of a back wall of each dock 1154 of carousel 115 that includes contacts that mate with contacts 1170 on a reagent cartridge. **Figure 19** shows contacts or pins 11914 in carriage 11907 and contacts or pins 11915 in carriage 11908.

In one example, a reagent cartridge (reagent cartridge 117) has length and width dimensions to fit snugly within carriage 11907 or carriage 11908. As described above with respect to **Figure 18****,** a front of a reagent cartridge (reagent cartridge 117) includes electronic pin receptacles 12794 to mate with electronic contacts or pins 11917 in carriage 11907. A front side of a reagent cartridge may also includes two diagonally spaced alignment sockets or openings that align with alignment pins 11917 in carriage 11907 to aide in the alignment of a reagent cartridge into carriage 11907 or carriage 11908.

**Figure 19** shows each of carriage 11907 and carriage 11908 connected to pulley support 11903 and pulley support 11904 through belt 11905 and belt 11906. Belt 11905 and belt 11906 may independently move or translate carriage 11907 and carriage 11908 laterally along rail 11902. Such movement allows each of carriage 11907 to bring a reagent container attached thereto to spittoon 11909 and to a wiping station (wiping station 11912 or wiping station 11913). Spittoon 11909 provides a vessel for a reagent cartridge in carriage 11907 or carriage 11908 to dispense reagent. Each of wiping station 11912 and wiping station 11913 may be a container (e.g., a rectangularly-shaped container containing a length of ribbon between rollers with the ribbon exposed at a top face or side of the container as viewed. The ribbon has a first side that is a cloth or similar absorbent material. A width of the ribbon may be at least as wide as a printhead of a reagent cartridge. The cloth or similar absorbent material provides a cleaning or wiping area for wiping a printhead (e.g., excess reagent on a printhead). After a wiping action by a printhead of a reagent cartridge on a portion of the ribbon, the ribbon may be advanced by instructions from controller 109 that direct a movement of the rollers in wiping station 11912 or 11913.

Each carriage may be electrically connected and communicate with controller 109. Carriage 11907 and carriage 11908 contain electronics to operate a reagent cartridge similar to electronics in dock 1154 to dispense reagent under the direction of non-transitory, machine-readable instructions associated with controller 109. When a reagent cartridge is connected to carriage 11907 or carriage 11908, instructions from controller 109 can direct the dispensing of reagent from the reagent cartridge, for example, into spittoon 11909 and contact between the printhead of a reagent cartridge and a ribbon of wiping station 11912 or wiping station 11913.

In a method of operation of a service station, instructions from controller 109 may direct a movement of one of carriage 11907 or carriage 11908 by belts 11905 and 11906 over spittoon 11909. At that time or a time before or after, instructions from controller 109 may direct arm assembly 118 to engage a reagent cartridge (e.g., reagent cartridge 117) and to install the reagent cartridge in the moved carriage (e.g., carriage 11907). Further instructions from controller 109 may then include instructions to direct electronics in carriage 11907 to cause the reagent cartridge to dispense or spit an amount of reagent into spittoon 11909 (e.g., an amount sufficient to wet the printhead and ensure it is not clogged). Following a dispensing operation, instructions from controller 109 may direct that the reagent cartridge be brought to wiping station 11912 or wiping station 11913 to clean residual reagent on the printhead of the reagent cartridge through a wiping action by the printhead on a ribbon of the wiping station. After wiping, instructions from controller 109 may direct arm assembly 118 to engage the reagent container and deliver the reagent container to a dock (dock 1154) on carousel 115 for a dispensing operation or to storage rack 106.

In the above discussion a reagent dispensing technique employing inkjet technology is described. A dispensing alternative includes a dispensing cartridge connected to a cartridge pump assembly that pumps a reagent from the dispensing cartridge onto a sample. Another dispensing alternative may include pipette transfer from a reagent container to a sample.

The following describes a representative operation of the sample processing system described with reference to **Figures 1-18****.** Initially, individual microscope slide(s) each containing at least one tissue sample will be brought to reaction compartment 104 by an operator or robot. Each slide will be placed individually in a reaction station (reaction station 112). Non-transitory, machine-readable instructions from controller 109 may direct a motor associated with each reaction station 112 to drive respective gear 155 to open a lid (lid 130) of the reaction compartment. Additional non-transitory, machine-readable instructions from controller 109 may then direct a pedestal (pedestal 185) of the respective reaction compartment to raise the tray (tray 180) in the reaction compartment to a third or fourth position (see **Figure 7C** and **Figure 7D**) to receive a slide from the operator or robot. The slide may be placed with the tissue sample side facing upward (facing lid 130). Once a slide is placed on tray 180, non-transitory, machine readable instructions from controller 109 may direct that an identifier on the microscope slide be read either by a slide identification reader or by capturing an image of the identifier by an imager and reading the captured image by controller 109 (e.g., the slide identification reader/imager connected to pedestal 185 or cartridge carrier plate 1152). Further instructions may then direct pedestal to lower the tray to, for example, a second position and direct motor 180 to close lid 130 of the respective reactions station 112. Representatively, the reading or capturing an image and then reading of an identifier may allow controller 109 to determine a processing protocol for the sample on the microscope slide. The instructions from controller may direct that an identifier of each of the plurality of slides in individual reaction stations (reaction station 112) of the sample processing system be read before processing of any of the plurality of slides is initiated or the processing may begin for each sample on a microscope slide once an identifier on that microscope slide is read independent or regardless of whether an identifier on another microscope slide in a reaction station of the sample processing system has been read. The independent proceeding of processing of microscope slides in individual reaction stations allows, for example, a reaction station to be loaded with a microscope slide and a processing initiated while samples on other microscope slides contained in other reaction stations in the sample processing system are already being processed.

A microscope slide including a tissue sample brought to reaction compartment 104 may be embedded with an embedding agent (e.g., paraffin) or may be processed to remove the embedding agent and adhere the tissue sample to the slide (i.e., pre-processed to remove the paraffin and adhere the tissue sample to the slide). Where a slide is brought to reaction compartment 104 having a tissue sample embedded with an embedding agent such as paraffin, non-transitory, machine-readable instructions from controller 109 may direct the system to perform an adherence and de-paraffinization (dewaxing) protocol on the embedded tissue sample. Representatively, instructions may direct that the slide with the embedded tissue sample be heated utilizing slide heater 1802 as part of a baking operation. The heat treatment should be sufficient to allow a sample on a slide to adhere or further adhere to a slide (a glass slide) and possibly to soften the embedding medium associated with a section on the slide. Representatively, the slide may be heated to a temperature on the order of 55°C to 70°C.

Following the heat treatment, instructions may direct that slide heater 1802 be turned off and the embedded tissue sample on the slide be exposed to a volume of a dewaxing solution such as xylene sufficient to coat the sample portion of slide. A dewaxing solution such as xylene may be stored in a container in storage compartment 101 beneath reaction compartment 104 as a bulk reagent (see **Figure 1**). The dewaxing solution container may be connected to a fluid connector 131 on lid 130 of the reaction compartment containing the embedded tissue sample on the slide. Instructions associated with controller 109 may direct that a dewaxing solution be transferred (e.g., pumped) from the dewaxing solution container to the respective fluid connector 131 and onto a surface of the slide in the reaction compartment. Following dispensing of the dewaxing solution, the instructions associated with controller 109 may direct that the tissue sample soak in the dewaxing solution for a period of time (e.g., one minute to five minutes). Following the soak time, instructions associated with controller 109 may direct pedestal 185 to move tray 180 containing the slide to the first position where the slide is tilted or deflected to a non-horizontal position in the reaction compartment to remove the dewaxing solution and paraffin from a surface of the slide (see e.g., **Figure 8**). Following a period to remove the dewaxing solution and paraffin from the surface of the slide, further instructions associated with controller 109 may direct pedestal 185 to move the slide to the second or third position in the reaction compartment. Still further instructions associated with controller 109 may direct that a valve associated with drain 121 be opened to drain the dewaxing solution to a waste container in, for example, storage compartment 101.

In another example, a dewaxing protocol may involve the dispensing of several reagents sequentially. For example, a first reagent applied to a tissue sample on a slide may be xylene. After a xylene treatment and its subsequent removal, the dewaxing protocol may specify that the tissue sample be exposed to an alcohol (e.g., ethyl alcohol). In such instance, a container containing xylene will be connected to a first fluid connector 131 on lid 130 of the reaction compartment and a container containing the alcohol will be connected to a second fluid connector 131 on lid 130.

A dewaxing process may also be performed at elevated humidity. Representatively, instructions from controller 109 may direct a fluid such as water (e.g., heated water) be introduced into a reservoir portion of chamber 125 (beneath tray 180 when tray 180 is in its lowest position in the chamber (a first position)) before a tissue sample on the slide is exposed to a volume of a dewaxing solution or a protocol of more than one sequentially reagent or, where the tissue sample is exposed to a volume of more than one sequential reagent, before or after one such reagent. Instructions from controller 109 may further control the draining of the reservoir to remove the fluid after the dewaxing process involving elevated humidity.

Following a dewaxing process, instructions associated with controller 109 may direct that the tissue sample be rinsed with a volume of a washing solution, such as water or other aqueous wash solution. A container containing a wash solution may be connected to a fluid connector (fluid connector 131) on lid 130 of the reaction compartment to provide the washing solution to the tissue sample. The washing solution may also include an amount of stain such as eosin in the wash solution to stain a sample on a slide. Generally, following a dewaxing operation, an embedding material in the section is removed leaving the sample as a virtually colorless object on a slide. Adding an amount of a stain such as eosin in the wash solution may allow the presence and location of the sample on the slide to be detected. Following the washing process, instructions associated with controller 109 may direct pedestal 185 to move tray 180 containing the slide to the first position where the slide is tilted or deflected to a non-horizontal position in the reaction compartment to remove the washing solution from a surface of the slide. Still further instructions associated with controller 109 may direct that a valve associated with drain 121 be opened to drain the washing solution to a waste container.

Following a washing process and possible capture of an image of the sample and identifier, instructions associated with controller 109 may direct pedestal 185 to move tray 180 containing the slide to the second or third position and then that the tissue sample be subjected to an antigen retrieval process to reverse the antigen masking effects of aldehyde fixation. A container containing an antigen retrieval solution, such as a tris- or citrate-based retrieval solution, may be stored in storage compartment 101 beneath reaction compartment 104 as a bulk reagent and be connected to a fluid connector (fluid connector 131) on lid 130 of the reaction compartment via a conduit to provide the antigen retrieval solution to the tissue sample. Instructions associated with controller 109 may direct that the antigen retrieval solution be provided to a surface of the tissue sample. Instructions associated with controller 109 may also direct that the antigen retrieval process be performed at an elevated temperature and possibly an elevated pressure. Representatively, instructions may direct that the slide with the tissue sample be heated utilizing slide heater 1802 to a temperature on the order of 100°C to 121°C. Instructions may further direct that the reaction compartment be brought to an elevated pressure of , for example, 1.0 atmosphere (atm) (15 pounds per square inch (psi) to 1.7 atm (25 psi)) by, for example, introducing air or an inert gas into the reaction compartment via a fluid connector (fluid connector 131) (e.g., introducing air or inert gas from a compressed air or inert gas source connected to a fluid connector). Utilizing an elevated pressure allows an antigen retrieval process to be expedited to, for example, a process time of five minutes compared to prior process times of 45 minutes or more under atmospheric conditions.

An antigen retrieval process may also be performed at elevated humidity, such as 70 percent to 100 percent relative humidity. Representatively, instructions from controller 109 may direct a fluid such as water (e.g., heated water) be introduced into a reservoir portion of chamber 125 before a tissue sample on the slide is exposed to a volume of an antigen retrieval solution. Instructions from controller 109 may further control the draining of the reservoir to remove the fluid after the antigen retrieval process involving elevated humidity. For example, controller 109 may direct that a valve associated with drain 121 be opened to drain the fluid in the reservoir to a waste container before tilting tray 180 and draining an antigen retrieval solution or concurrently with draining the antigen retrieval solution.

Once an antigen retrieval process is completed, instructions associated with controller 109 instructions associated with controller 109 may direct pedestal 185 to move tray 180 containing the slide to the first position where the slide is tilted or deflected to a non-horizontal position in the reaction compartment to remove the antigen retrieval solution from a surface of the slide. Additional instructions may then direct pedestal 1985 to return tray to the second or third position. Further instructions associated with controller 109 may direct that a valve associated with drain 121 be opened to drain the antigen retrieval solution to a waste container. Still further instructions may then direct that the tissue sample be rinsed with a volume of a washing solution, such as water or a wash buffer such as TBS or phosphate-buffered saline containing a surfactant. Following washing, instructions associated with controller 109 may direct pedestal 185 to again move tray 180 containing the slide to the first position where the slide is tilted or deflected to a non-horizontal position in the reaction compartment to remove the wash solution from a surface of the slide. Additional instructions may then direct pedestal 1985 to return tray to the second or third position in preparation for a staining process. Further instructions associated with controller 109 may direct that a valve associated with drain 121 be opened to drain the washing solution to a waste container.

For a staining process, instructions associated with controller 109 may direct a motor associated with the reaction station 112 containing a slide with a sample ready for staining to drive respective gear 155 to open a lid (lid 130) of the reaction compartment. Additional instructions from controller 109 may then direct a pedestal (pedestal 185) of the reaction compartment to raise the tray (tray 180) in the reaction compartment to the fourth position where tray 180 and/or a slide thereon are outside the chamber (chamber 125) (see **Figure 7D**). If not done earlier, further instructions from controller 109 may direct that a location of the sample on the microscope slide or a portion thereof for staining be determined based on the captured image of the sample on the microscope slide following a washing operation.

Before or after a slide is raised in preparation for a staining process, instructions associated with controller 109 may direct the retrieval of a reagent cartridge from storage rack 106 and the loading or docking of the reagent cartridge at one of docks 1154 on pedestal 1152 of carousel 115. Further instructions associated with controller 109 may direct that the reagent cartridge loaded on pedestal 1152 be positioned with a snout or base portion of the reagent cartridge is over the tissue sample on the raised slide. Such instructions include directing motor 1157 to rotate column 1151 and accordingly pedestal 115 and motor 1143 to move carousel 115 in a longitudinal direction. Once positioned, instructions may direct the ejecting (printing) of reagent from the reagent cartridge onto the sample at the predetermined location of the sample or a portion thereof. Representatively, a drop-on-demand-type printhead, such as a thermal printhead, in the reagent cartridge may dispense a reagent, such as a detection agent or antibody, in droplets having a volume of 1 picoliter (pL) to 10 nanoliters (nL), or 1 pL to 5 nL, or 1 pL to 1 nL, or 1 pL to 500 pL, or 1 pL to 250 pL or 1 pL to 100 pL, or 1 pL to 50 pL. Representatively, an inkjet cartridge can deliver 15 microliters (µL) per square inch per pass or more (at least 15 µL) where a pass is a dispense (ejection) of reagent from the multiple nozzles in a printhead of an inkjet cartridge either while the reagent cartridge (carousel) and slide are stationary or where at least one of the reagent cartridge (carousel) and slide move unidirectionally to expand a dispense area on the slide. Representatively, controller 109 directs a printhead of a reagent cartridge to dispense multiple drops (i.e., multiple drops from multiple nozzles) to produce a higher volume of reagent per pass. Representative delivery amounts through a thermal inkjet printhead include 15 µL to 30 µL per square inch per pass, 15 µL to 25 µL per square inch per pass, and 15 µL to 20 µL per square inch per pass.

Following a staining process, instructions associated with controller 109 may direct the movement of the reagent cartridge and carousel away from a position above the slide and direct a pedestal (pedestal 185) of the reaction compartment to lower the tray (tray 180) containing the slide that received the staining to the second or third position where inside the chamber (chamber 125) and the closing of the lid (lid 130) of the reaction compartment. Additional instructions associated with controller 109 may direct that the sample on the slide be extended an incubation period (to, for example, allow a primary antibody to bind to a targeted antigen). Following any incubation period, instructions associated with controller 109 may direct that the tissue sample be rinsed with a volume of a washing solution to remove any non-reacted/non-conjugated reagent. Following rinsing, instructions associated with controller 109 may direct pedestal 185 to move tray 180 containing the slide to the first position where the slide is tilted or deflected to a non-horizontal position in the reaction compartment to remove the wash solution from a surface of the slide. Additional instructions may then direct pedestal 1985 to return tray to the second or third position in preparation for possible additional staining process(es). Further instructions associated with controller 109 may direct that a valve associated with drain 121 be opened to drain the washing solution and any excess stain to a waste container.

Once all staining processes are finished for tissue sample on a slide, instructions associated with controller 109 may direct the system to alert a user that the slide is ready for removal. Additional instructions from controller 109 may then direct a pedestal (pedestal 185) of the reaction compartment to raise the tray (tray 180) in the reaction compartment to the fourth position where tray 180 and/or a slide thereon are outside the chamber (chamber 125) to allow an operator or robot to retrieve the slide.

A staining process may also be performed at elevated humidity, such as 70 percent to 100 percent relative humidity. Representatively, instructions from controller 109 may direct a fluid such as water (e.g., heated water) be introduced into a reservoir portion of chamber 125 before a tissue sample on the slide is exposed to one or more stains. Instructions from controller 109 may further control the draining of the reservoir to remove the fluid after a staining process involving elevated humidity. For example, controller 109 may direct that a valve associated with drain 121 be opened to drain the fluid in the reservoir to a waste container before tilting tray 180 and draining any excess stain or concurrently with draining any excess stain. A staining process may also be performed at elevated pressure. Instructions associated with controller 109 may direct that the reaction compartment be brought to an elevated pressure of , for example, 1.0 atmosphere (atm) (15 pounds per square inch (psi) to 1.7 atm (25 psi)) by, for example, introducing air or an inert gas into the reaction compartment via a fluid connector (fluid connector 131) (e.g., introducing air or inert gas from a compressed air or inert gas source connected to a fluid connector) before exposing a tissue sample to a stain.

### ASPECTS

The specification includes the following aspects:
1. A system comprising:
   a carousel comprising a plurality of mounting stations dimensioned to receive at least one fluid dispensing cartridge; and
   a receiving assembly positioned beneath the carousel, the receiving assembly comprising a plurality of reaction stations, each of the plurality of reaction stations comprising:
      a body comprising a length dimension and a width dimension that together define a chamber to accommodate a single slide therein; and
      a lid comprising a first position to cover the chamber and a second position to expose a portion of the chamber.
2. The system of aspect 1, wherein each of the plurality of reaction stations comprise a slide support, wherein the slide support comprises a first depth in the chamber and a different second depth in the chamber.
3. The system of aspect 2, wherein when the lid of one of the plurality of reaction stations is in the second position, the slide support of the one of the plurality of reaction stations is operable to be moved from the first depth to the second depth.
4. The system of aspect 2, wherein the slide support of each of the plurality of slide supports is operable to rotate.
5. The system of any of aspects 2-4, wherein the slide support comprises a heating unit.
6. The system of any of aspects 1-5, wherein the lid comprises a outer surface and an opposite inner surface, wherein the outer surface comprises a plurality of hose couplings coupled thereto and the inner surface comprises a plurality of conduits coupled thereto, wherein each of the plurality of hose couplings is coupled to a respective one of the plurality of conduits.
7. The system of any of aspects 1-6, wherein the carousel is linearly translatable in three dimensions.
8. The system of any of aspects 1-7, wherein the carousel is rotatable about a center axis.
9. The system of any of aspects 1-8, wherein the carousel and the receiving assembly are contained in the housing, the system further comprising a cartridge rack operable to contain a plurality of fluid dispensing cartridges.
10. The system of any of the aspects 1-9, wherein the carousel is operable to retrieve a fluid dispensing cartridge from the cartridge rack and to return a fluid dispensing cartridge to the cartridge rack.
11. The system of aspect 10, wherein the carousel is linearly translatable in three dimensions and the cartridge rack is positioned relative to the carousel in the housing such that to retrieve or to return a fluid dispensing cartridge from or to the cartridge rack requires the carousel to be translated in a first of the three dimensions.
12. The system of any of aspects 1-11, further comprising a refrigeration unit coupled to the cartridge rack.
13. A method comprising:
   moving a lid of a reaction station of a processor assembly from a first position to cover a reaction chamber to a second position to expose a portion of the reaction chamber, wherein the reaction chamber comprises only a single microscope slide comprising a sample thereon and the reaction station is one of a plurality of reaction stations in the processing assembly;
   translating a carousel over the plurality of reaction stations of the processing assembly, the carousel comprising at least one of a slide identification reader and an imager coupled thereto;
   reading by the slide identification reader an identifier on the microscope slide or reading an image of the identifier;
   determining a processing protocol for the sample on the microscope slide based on the read identifier;
   retrieving by the carousel one or more reagent dispensing cartridges from a storage rack, each of the one or more reagent dispensing cartridges each comprising a reagent required to perform the processing protocol; and
   dispensing the one or more reagents on the sample on the microscope slide.
14. The method of aspect 13, after reading information provided on each of the plurality of slides, the method comprises moving the lid to the first position.
15. The method of aspect 13 or aspect 14, wherein prior to dispensing the one or more reagents on the sample on the microscope slide, the method comprises moving the lid to the second position.
16. The method of any of aspects 13-15, wherein prior to dispensing the one or more reagents on the sample on the microscope slide, the method comprises raising the microscope slide in the chamber.
17. The method of any of aspects 13-16, further comprising, following dispensing the one or more reagents on the sample on the microscope slide, the method comprises returning by the carousel the one or more fluid dispensing cartridges to the storage rack.
18. The method of any of aspects 13-17, wherein the reaction station is a first reaction station and at least one more of the plurality of reaction stations comprises a single microscope slide comprising a sample and an identifier, and wherein prior to dispensing the one or more reagents on the sample on the microscope slide in the first reaction station, the method comprises:
   reading by the slide identification reader of the identifier on the microscope slide in the at least one more of the plurality of reaction stations or reading an image of the identifier; and
   determining a processing protocol for the sample on the microscope slide in the at least one more of the plurality of reaction stations based on the read identifier.
19. The method of any of aspects 13-18, wherein dispensing comprises dispensing through a thermal inkjet process.
20. The method of aspect 19, wherein dispensing comprises dispensing the one or more reagents in an amount of at least 15 microliters (µL) per square inch per pass.

In the foregoing specification, the invention has been described with reference to specific embodiments thereof. It will, however, be evident that various modifications and changes can be made thereto without departing from the broader spirit and scope of the invention as set forth in the appended claims. For example, a reagent cartridge as disclosed herein (e.g. reagent cartridge 408) may contain solvent or water instead of a reagent and used for purposes other than, for example, staining a sample on an underlying slide. The specification and drawings are, accordingly, to be regarded in an illustrative rather than a restrictive sense.

## Claims

1. A system comprising:
a carousel comprising a plurality of mounting stations dimensioned to receive at least one fluid dispensing cartridge; and
a receiving assembly positioned beneath the carousel, the receiving assembly comprising a plurality of reaction stations, each of the plurality of reaction stations comprising:
a body comprising a length dimension and a width dimension that together define a chamber to accommodate a single slide therein; and
a lid comprising a first position to cover the chamber and a second position to expose a portion of the chamber.

2. The system of claim 1, wherein each of the plurality of reaction stations comprise a slide support, wherein the slide support comprises a first depth in the chamber and a different second depth in the chamber.

3. The system of claim 2, wherein when the lid of one of the plurality of reaction stations is in the second position, the slide support of the one of the plurality of reaction stations is operable to be moved from the first depth to the second depth.

4. The system of claim 2, wherein the slide support comprises a heating unit.

5. The system of claim 1, wherein the carousel is linearly translatable in three dimensions.

6. The system of claim 1, wherein the carousel is rotatable about a center axis.

7. The system of claim 1, wherein the carousel and the receiving assembly are contained in the housing, the system further comprising a cartridge rack operable to contain a plurality of fluid dispensing cartridges.

8. The system of claim 7, wherein the carousel is operable to retrieve a fluid dispensing cartridge from the cartridge rack and to return a fluid dispensing cartridge to the cartridge rack.

9. The system of claim 8, wherein the carousel is linearly translatable in three dimensions and the cartridge rack is positioned relative to the carousel in the housing such that to retrieve or to return a fluid dispensing cartridge from or to the cartridge rack requires the carousel to be translated in a first of the three dimensions.

10. The system of claim 9, further comprising a refrigeration unit coupled to the cartridge rack.

11. A method comprising:
moving a lid of a reaction station of a processor assembly from a first position to cover a reaction chamber to a second position to expose a portion of the reaction chamber, wherein the reaction chamber comprises only a single microscope slide comprising a sample thereon and the reaction station is one of a plurality of reaction stations in the processing assembly;
translating a carousel over the plurality of reaction stations of the processing assembly, the carousel comprising at least one of a slide identification reader and an imager coupled thereto;
reading by the slide identification reader an identifier on the microscope slide or reading an image of the identifier;
determining a processing protocol for the sample on the microscope slide based on the read identifier;
retrieving by the carousel one or more reagent dispensing cartridges from a storage rack, each of the one or more reagent dispensing cartridges each comprising a reagent required to perform the processing protocol; and
dispensing the one or more reagents on the sample on the microscope slide.

12. The method of claim 11, after reading information provided on each of the plurality of slides, the method comprises moving the lid to the first position.

13. The method of claim 11, wherein prior to dispensing the one or more reagents on the sample on the microscope slide, the method comprises moving the lid to the second position.

14. The method of claim 11, wherein prior to dispensing the one or more reagents on the sample on the microscope slide, the method comprises raising the microscope slide in the chamber.

15. The method of claim 11, further comprising, following dispensing the one or more reagents on the sample on the microscope slide, the method comprises returning by the carousel the one or more fluid dispensing cartridges to the storage rack.

16. The method of claim 11, wherein the reaction station is a first reaction station and at least one more of the plurality of reaction stations comprises a single microscope slide comprising a sample and an identifier, and wherein prior to dispensing the one or more reagents on the sample on the microscope slide in the first reaction station, the method comprises:
reading by the slide identification reader of the identifier on the microscope slide in the at least one more of the plurality of reaction stations or reading an image of the identifier; and
determining a processing protocol for the sample on the microscope slide in the at least one more of the plurality of reaction stations based on the read identifier.

17. The method of claim 11, wherein dispensing comprises dispensing through a thermal inkjet process.

18. The method of claim 17, wherein dispensing comprises dispensing the one or more reagents in an amount of at least 15 microliters (µL) per square inch per pass.
